# EUROPÄISCHE PATENTSCHRIFT

(11) **EP 2 047 669 B1**
(45) Veröffentlichungstag und Bekanntmachung des Hinweises auf die Patenterteilung: **21.05.2014**
(21) Anmeldenummer: 06776487.8
(22) Anmeldetag: 28.07.2006
(51) Int. Cl.: H04M 3/56

(54) **VERFAHREN ZUM DURCHFÜHREN EINER AUDIOKONFERENZ, AUDIOKONFERENZEINRICHTUNG UND UMSCHALTEVERFAHREN ZWISCHEN KODIERERN**
METHOD FOR CARRYING OUT AN AUDIO CONFERENCE, AUDIO CONFERENCE DEVICE, AND METHOD FOR SWITCHING BETWEEN ENCODERS
PROCÉDÉ POUR RÉALISER UNE CONFÉRENCE AUDIO, DISPOSITIF DE CONFÉRENCE AUDIO ET PROCÉDÉ DE COMMUTATION ENTRE ENCODEURS

(43) Veröffentlichungstag der Anmeldung: 15.04.2009
(73) Patentinhaber: Unify GmbH & Co. KG, 81379 München (DE)
(72) Erfinder: GILG, Virginie, 80469 München (DE); KLEEMANN, Tobias, 81479 München (DE); KRUMBÖCK, Jörg, 10823 Berlin (DE); SCHMID, Walter, 80686 München (DE)
(74) Vertreter: Fritzsche, Thomas
(86) Internationale Anmeldenummer: PCT/EP2006/007495
(87) Internationale Veröffentlichungsnummer: WO 2008/011902

(56) Entgegenhaltungen:
- WO-A-02/091641
- WO-A-02/091724
- WO-A-03/103263

## Beschreibung

Sprachkonferenzsysteme erlauben ein Zusammenschalten von mehreren Sprachendeinrichtungen zu einer Telefonkonferenz, so dass einem jeweiligen Teilnehmer die über jeweilige Mikrofone der Sprachendeinrichtungen der übrigen Teilnehmer aufgenommenen Audiosignale als gemischtes Konferenzsignal zur AudioAusgabe zugeführt wird. Das für einen Teilnehmer zur Ausgabe bestimmte, gemischte Konferenzsignal - im Folgenden auch Mischsignal genannt - ist dabei überwiegend eine Überlagerung aller anliegenden Audio-Signale, jedoch häufig ohne das Audiosignal des Teilnehmers, da dieser seine selbst gesprochenen Beiträge zur Konferenz nicht selber zu hören braucht und sogar üblicherweise nicht hören soll, da sich dadurch eine Art ungewollter Echo-Effekt des eigenen Gesprochenen einstellen würde, den der Teilnehmer als störend empfinden könnte. Somit wird häufig für jeden der N Teilnehmer einer Telefonkonferenz ein spezifisches Mischsignal gebildet, bei dem die (N-1) Sprachsignale der anderen Teilnehmer der Telefonkonferenz zu dem spezifischen Mischsignal verarbeitet werden. Dies kann sich für das Sprachkonferenzsystem als rechenaufwendig erweisen und Nachteile in der Sprachverständlichkeit bei an der Telefonkonferenz beteiligten Zuhörern mit sich bringen, da das jeweilige Mischsignal beispielsweise auch Audiosignale mit Hintergrundgeräuschen umfassen kann, wobei sich die Hintergrundgeräusche von mehreren Audiosignalen derart überlagern können, dass sie deutlich wahrnehmbar und die Verständlichkeit der Nutz-Audiosignale - also der gesprochenen Sätze eines der Teilnehmer - beeinträchtigen.

Zur Reduzierung des Rechenaufwands und der Hintergrundgeräusche kann es insbesondere bei Telefonkonferenzen mit einer vergleichsweise großen Anzahl an Teilnehmern sinnvoll sein, nicht alle (N-1) Sprachsignale der N Telnehmer zu überlagern, sondern lediglich eine Untermenge dieser N Teilnehmer und zwar insbesondere eine Untermenge von M - mit M<N - sprachaktiven Teilnehmern. Die Audiosignale der übrigen, weitgehend inaktiven Teilnehmer können bei der Erzeugung des Mischsignals ignoriert werden, so dass lediglich eine Überlagerung der M sprachaktiven Audiosignale durchgeführt wird. Diese Vorgehensweise basiert auf der Annahme, dass bei einer durch einen Moderator geführten, gut organisierten Telefonkonferenz lediglich wenig Teilnehmer zeitgleich sprechen und üblicherweise zeitlich nacheinander gesprochen wird.

Für ein paketvermitteltes Kommunikationssystem ist ein derartiges Verfahren, bei dem eine Audioenergie je Konferenzteilnehmer ermittelt wird, anhand der eine Anzahl M von Konferenzteilnehmern in ein Mischsignal aufgenommen werden und die übrigen Konferenzteilnehmer nicht in das Mischsignal einfließen, aus der Druckschrift "Automatic Addition and Deletion of clients in VoIP Conferencing", IEEE Symposium on Computers and Communications, Hammamet, Tunesien, Juli 2001 von Prasad, Kuri, Jamadagni, Dagale, Ravindranath bekannt. Das Verfahren zeichnet sich insbesondere dadurch aus, dass für jeden Konferenzteilnehmer das Mischsignal individuell bei einem Endgerät des jeweiligen Konferenzteilnehmers gebildet wird und jeder Konferenzteilnehmer die Läutstärken der gemischten M Signale selbst über eine Benutzeroberfläche anpassen kann. Erforderlich ist dagegen aber eine hohe Übertragungsbandbreite. Weiterhin wird in der Druckschrift eine Obergrenze von M=4 erwähnt.

Wird nun - wie bei dem im letzten Abschnitt erwähnten Verfahren - die Menge der aktiven und inaktiven Teilnehmer dynamisch gebildet und über den Zeitverlauf gemäß den am Sprachkonferenzsystem anliegenden Audiosignalen an die aktuellen und wechselnden Aktivitätsgegebenheiten angepasst, so ergeben sich Nachteile in der Audioqualität des Mischsignals beim Herausnehmen eines bisher aktiven und nun inaktiven Audiosignals aus dem Mischsignal oder beim Hinzufügen eines vorher nicht enthaltenen inaktiven und nun aktiven Audiosignals zum Mischsignal. Es kann sich beispielsweise ein abruptes Erscheinen und/oder abruptes Wegfallen von Hintergrundgeräuschen ergeben, sofern ein Audiosignal eines Teilnehmers derartige Hintergrundgeräusche aufweist und dieses Audiosignal für einen Zeitraum als aktiver und für einen anderen Zeitraum als inaktiver Teilnehmer ermittelt wird. Darüber hinaus können ein Übersteuerungseffekt und ein Abschneiden von übersteuerten Audiosignalen in Form eines so genannten Sprach-Clippings auftreten, das sich aufgrund einer falschen Zusammenstellung der als aktiv angesehenen Audiosignale ergeben kann.

Darüber hinaus kann die Sprachqualität leiden, wenn Kanäle eines Sprachkonferenzsysteme dynamisch erzeugt, die unterschiedliche Eingangssignale dynamisch gemischt und zu dynamisch wechselnden Zielteilnehmern verbunden werden, so dass ein zustandsbehaftetes Verfahren zur Kodierung von zu übertragenden Mischsignalen beispielsweise beim Umschalten von einem ursprünglichen Kodierer zu einem weiteren Kodierer zu Kodierungsfehlern oder beim Dekodieren an einer Teilnehmerendeinrichtung zu Dekodierungsfehlern führen kann. Beispielsweise kann dies eintreten, wenn ein bisher inaktiver Teilnehmer zu einem aktiven Teilnehmer wird und für diesen ein neuer individueller Kodierer und Konferenzkanal instantiiert wird und ein individuelles Mischsignal für diesen Teilnehmer mittels des individuellen Kodierers gebildet wird. Für den Teilnehmer ergibt sich somit, dass das empfangene kodierte Mischsignal ab einem Zeitpunkt von einem anderen Kodierer basierend auf eine andere Zusammensetzung des Mischsignals gebildet wird. Ein Dekodierer einer empfangenden Teilnehmerendeinrichtung wird somit bis zu einem Zeitpunkt das kodierte Mischsignal des ursprünglichen Kodierers und anschließend das kodierte Mischsignal des weiteren Kodierers empfangen. Dies kann für eine Übergangszeit zu Qualitätseinbußen bei der Audioausgabe an der Teilnehmerendeinrichtung führen.

Das Dokument WO 03/103263 A1 offenbart eine verbesserte Architektur für einen Mischer, der besonders für Konferenzen mit vielen Teilnehmern geeignet list. Die Teilnehmer werden zu Gruppen zusammengefasst. Innerhalb jeder Gruppe werden "aktive" Sprecher identifiziert, zu einer Untergruppe zusammengefasst und die Datenströme dieser Teilnehmer werden in die Konferenz einbezogen. Die Zuordnung zu einer Gruppe kann vorgegeben sein, oder durch den Teilnehmer selbst gewählt werden. Weiterhin wird die Sprachaktivität der Teilnehmer überwacht, so dass dies zu einer Neu- Zuordnung eines Teilnehmers zu einer Gruppe führen kann. Ziel ist die Einsparung von Ressourcen, bzw. die Unterstützung umfangreicher Konferenzen.

Im Dokument WO 02/091724 ist die zuordnung von Bandbreite zu dominanten Sprechern beschrieben. Verbleibende Bandbreite wird verbliebenen Sprechern zugeordnet. Dabei ist die Bandbreite, die den dominanten Sprechern zugeordnet wird größer, als die Bandbreite für die verbliebene Sprecher der Konferenz. Dadurch kann der Audio- Datenstrom der dominanten Sprecher mit einet höheren Qualität übertragen werden. Das System kann einen Detektor für den dominanten Sprecher enthalten und einen Code für diesen Sprecher an andere Teilnehmer senden, so dass der dominante Sprecher für sie optisch kenntlich gemacht werden kann.

Das Dokument WO 02/091641 beschreibt die gleichzeitige Nutzung von mindestens zwei Konferenzen durch einen Teilnehmer. Hierbei werden Datenströme aller Teilnehmer analysiert und gegebenenfalls einer Verbesserung der Qualität unterzogen. Dabei werden, Analysedaten einer Kontrolleinheit zugeführt, die anhand dieser Daten entscheiden, ob ein dekodierter Datenstrom einem Mischer zugeführt wird. Ein gemischter Datenstrom wird transparent (d.h. uncodiert) an jeden Teilnehmer weitergeleitet. Verbindungsindividuelle Verbindungsparameter können die Verwendung eines bestimmten CODECs für jede einzelne Verbindung festlegen. Die gleichzeitige Teilnahme eines Teilnehmers an zwei oder mehr Konferenzen wird durch ein Verwaltungsprogramm verwaltet. Mittels einer Cross Conference Data Base (CCDB) wird jedem Teilnehmer ein Status in einer jeweiligen Konferenz zugeordnet. Die Datenströme können codiert an die Teilnehmer übertragen werden.

Es ist Aufgabe der Erfindung gegenüber dem Stand der Technik ein verbessertes Verfahren und eine verbesserte Anordnung anzugeben, um eine optimierte Durchführung von Audiokonferenzen zu ermöglichten.

Gelöst wird diese Aufgabe durch ein Verfahren zum Durchführen einer Audiokonferenz mit den Merkmalen nach Patentanspruch 1 und einer Audiokonferenzeinrichtung gemäß Patentanspruch 15, sowie durch ein Umschalteverfahren zum Umschalten zwischen Kodierern mit den Merkmalen nach Patentanspruch 16 und einer weiteren Audiokonferenzeinrichtung gemäß Patentanspruch 20.

Vorteilhafte Weiterbildungen und Ausführungsformen der Erfindung sind in den unabhängigen Ansprüchen angegeben.

In dem erfindungsgemäßen Verfahren gemäß Patentanspruch 1 zum Durchführen einer Audiokonferenz, bei dem der Audiokonferenz, von Kommunikationseinrichtungen Audiodatenströme zugeführt werden und für die Audiodatenströme jeweils zu einem Audiodatenstrom zugeordnete Klassifizierungsinformationen erfasst werden, werden die Audiodatenströme entsprechend eines Ergebnisses einer Auswertung der Klassifizierungsinformationen zu mindestens drei, bezüglich des Ergebnisses homogene Gruppen zugeordnet. Die individuellen Audiodatenströmen werden gruppeneinheitlich signalbearbeitet, und die signalbearbeiteten Audiodatenströme werden zur Bildung von an den Kommunikationsendeinrichtungen auszugebenden Audiokonferenzdatenströmen überlagert.

Audiodatenströme sind hierbei insbesondere für eine leitungsvermittelte oder paketorientierte Übertragung kodierte Audiosignale, wobei die Audiosignale vorzugsweise an den Kommunikationseinrichtungen mittels Mikrofonen aufgenommene Sprachsignale darstellen. Bei den Kommunikationseinrichtungen kann es sich um Sprachendgeräte oder um Video- bzw. Multimedia-Endeinrichtungen handeln, wobei als Audiodatenstrom ein Audioanteil der Video- bzw. Multimedia-Daten angesehen wird.

Die Signalbearbeitung und/oder die Überlagerung der Audiodatenströme kann direkt für die in kodierter Form vorliegenden Audiodatenströme oder für in Audiosignale dekodierte Audiodatenströme durchgeführt werden. Bei der Verwendung von Audiosignalen erfolgt ein Dekodieren eines Audiodatenstroms mittels eines Dekodierers eines CODECs (coding and encoding). Nach der Signalbearbeitung und/oder der Überlagerung derartig dekodierter Audiosignale werden die Audiosignale mittels Kodieren durch einen weiteren oder demselben CODEC in Audiodatenströme für die Übertragung zu den Kommunikationsendeinrichtungen gewandelt.

Unter einer Auswertung der Klassifizierungsinformationen wird insbesondere ein Vergleich mit Referenzwerten verstanden, wobei ein Ergebnis der Auswertung beispielsweise die Information ist, dass sich die Klassifizierungsinformation unterhalb eines ersten Referenzwertes befindet aber oberhalb eines zweiten Referenzwertes. Ferner können bei der Auswertung der Klassifizierungsinformationen die Klassifizierungsinformationen der Audiodatenströme getrennt voneinander betrachtet werden oder in Relation zueinander gebracht werden. Darüber hinaus kann eine Auswertung der Klassifizierungsinformationen auf verschiedenen logischen, miteinander logisch verknüpften Prüfungsschritten basieren. Weiterhin können die Prüfungsschritte unterschiedlich gewichtet sein, so dass beispielsweise durch ein Nichterfüllen eines Prüfungskriteriums eines Prüfungsschrittes eine Einordnung in eine bestimmte Gruppe erzwungen werden kann.

Die Zuordnung in drei, bezüglich des Ergebnisses homogene Gruppen erfolgt zum Beispiel mit zwei Referenzwerten derart, dass alle Audiodatenströme, deren Klassifizierungsinformation unter dem ersten und dem zweiten Referenzwert liegen zu einer ersten Gruppe zugeordnet werden, dass alle Audiodatenströme, deren Klassifizierungsinformation oberhalb dem ersten und dem zweiten Referenzwert liegen zu einer zweiten Gruppe zugeordnet werden, und dass alle Audiodatenströme, deren Klassifizierungsinformation zwischen dem ersten und dem zweiten Referenzwert liegen zu einer dritten Gruppe zugeordnet werden.

Homogen oder konform sind die Gruppen dergestalt, dass alle Audiodatenströme, die zu einer Gruppe zugeordnet sind, dieselben Vergleichs- bzw. Auswerteergebnisse liefern.

Das Verfahren ist insofern vorteilhaft, als dass die Komplexität der Signalbearbeitung reduziert werden kann, da lediglich wenig verschiedene - gemäß der Anzahl an Gruppen - Signalbearbeitungen durchgeführt werden. Darüber hinaus kann die Sprachverständlichkeit bei Empfang der überlagerten Audiodatenströme verbessert werden, da als wichtig erachtete Audiodatenströme bei der Überlagerung hervorgehoben werden können, beispielsweise durch Veränderung einer Lautstärke, einer Tonhöhe, einer Phasenlage oder anderer Audio-Parameter der jeweiligen Audiodatenströme und im Gegenzug als unwichtig erachtete Audiodatenströme gedämpft oder anderweitig bearbeitet werden können.

Vorzugsweise kann dazu in einer vorteilhaften Ausgestaltung der Erfindung im Rahmen der Erfassung einer der Klassifizierungsinformationen für einen der Audiodatenströme mindestens eine eine Eigenschaft des Audiodatenstroms wiedergebende Größe erfasst werden. Diese Größe repräsentiert beispielsweise einen Audiopegel, einen Lautstärkepegel, eine Audioenergie, und kann mittels Messungen und/oder Signalanalyse ermittelt werden. Die ermittelten Größen können vorzugsweise mittels einfach zu implementierender Vergleichsoperatoren mit Referenzwerten verglichen werden, so dass die Audiodatenströme beispielsweise in laute, leise und komplett stumme Audiodatenströme eingeteilt werden können.

Vorzugsweise kann eine derartige Ermittlung von Audio-Parametern bereits bei einer Dekodierung eines jeweiligen Audiodatenstroms durch einen CODEC erfolgen, da ein Dekodieren vor einer Signalbearbeitung und vor einer Überlagerung der verschiedenen Audiodaten ohnehin durchgeführt wird. Auf diese Weise kann eine bereits bestehende Komponente eines Audiokonferenzsystems - der CODEC - zur Umsetzung von Teilen der Verfahrensschritte der Erfindung verwendet werden.

Eine weitere zur Gruppierung der Audiodatenströme zu verwendende Größe ist beispielsweise ein Sprachhäufigkeitswert, der eine über einen Zeitraum ermittelte Relation zwischen Sprachaktivität und Sprachinaktivität über einen Zeitabschnitt darstellt. Zusammen mit der Analyse eines Lautstärkepegels kann der Sprachhäufigkeitswert für eine präzise Unterscheidung zwischen Sprechern, die nur einmalig oder selten sprachaktiv sind und Sprechern, die über einen längeren Zeitraum - aber evtl. mit kurzen Unterbrechungen - sprachaktiv sind, herangezogen werden.

Bei derartigen Analysen ist es insbesondere vorteilhaft, wenn nicht nur Absolutwerte der eine Eigenschaft des Audiodatenstroms wiedergebenden Größen ausgewertet werden, sondern dass bei der Auswertung die Relation der Größen zueinander in das Ergebnis der Auswertung mit einfließt. So kann beispielsweise eine Gruppe der zwei höchstaktiven Audiodatenströme gebildet werden, unabhängig davon, ob nun alle Audiodatenströme eher leise Sprache oder eher laute Sprache übermitteln. Eine derartige Klassifizierung der Audiodatenströme kann durch einen Vergleich von Klassifizierungsinformationen zwischen den Audiodatenströmen untereinander ermittelt werden, oder durch dynamische Anpassung der absoluten Referenzwerte für den Vergleich mit den Klassifizierungsinformationen.

In einer vorteilhaften Ausgestaltung des erfindungsgemäßen Verfahrens kann die gruppeneinheitliche Signalbearbeitung eine gruppenspezifische Dämpfung bzw. eine negative Verstärkung der Audiodatenströme umfassen. Somit kann eine Signalpegelverringerung von ungewünschten Beiträgen in der Audiokonferenz erreicht werden, beispielsweise von Audiodatenströmen, die lediglich Hintergrundrauschen und Hintergrundlärm als Audiosignale beinhalten. Eine Gruppierung für eine gruppenspezifische Dämpfung ist dabei insofern vorteilhaft, als dass das Gehör des Menschen nur deutliche Änderungen der Lautstärke wahrnehmen kann und somit eine aufwendige, individuell unterschiedliche Dämpfung evtl. gar nicht wahrgenommen wird. Der Dämpfungsfaktor je Gruppe sei dagegen vorzugsweise frei konfigurierbar oder dynamisch änderbar, um flexibel auf verschieden Einflüsse wie die Anzahl der Teilnehmer an der Audiokonferenz reagieren zu können.

Neben einer Dämpfung sei darüber hinaus auf analoge Weise auch ein gruppenspezifisches Verstärken von Audiodatenströmen möglich, so dass allgemein von einer Signalstärkekorrektur gesprochen werden kann.

Ferner können - insbesondere bei Verwendung von Stereoausgabe an den Kommunikationsendeinrichtung der Audiokonferenz - die Audiodatenströme gruppeneinheitlich bezüglich einer Phasenlage ihrer dekodierten Audiosignale bearbeitet werden, so dass Audiosignale von als wichtig erachteten Audiodatenströmen in der Mitte einer virtuell wahrnehmbaren Stereo-Verteilung erscheinen, während Audiosignale von als unwichtiger erachteten Audiodatenströmen derart in ihrer Phasenlage binaural signalbearbeitet werden, dass ihre Position in einer virtuell wahrnehmbaren Stereo-Ebene durch den zuhörenden Konferenzteilnehmer derart empfunden werden, als ob sie am linken oder rechten Rand der virtuell wahrnehmbaren Stereo-Ebene angeordnet wären.

In einer vorteilhaften Weiterbildung der Erfindung kann die Auswertung der Klassifizierungsinformationen eine Bewertung einer einem der Audiodatenströme individuell zugeordneten, vorgebbaren Gruppenvorauswahl umfassen, so dass je nach der Gruppenvorauswahl die Zuordnung zu einer vorausgewählten Gruppe erzwungen werden kann, obwohl sich zum Beispiel bei alleiniger Auswertung eines Audioaktivitätsvergleich eine andere Gruppenzugehörigkeit ergeben würde. Beispielsweise zeigt sich in realen Audiokonferenzen häufig, dass derjenige Teilnehmer, der die Audiokonferenz initiiert auch die Aufgabe eines Moderators während dem Ablauf der Audiokonferenz übernimmt. Somit mag es sinnvoll sein diesen Teilnehmer in eine bevorzugte Gruppe zu sortieren, unabhängig davon, ob er in einem Zeitabschnitt keinen Sprachbeitrag zur Audiokonferenz getätigt hat, da es häufig wichtig sein kann, dass der Moderator der Audiokonferenz, auch wenn er mal leise spricht, von allen Teilnehmern der Audiokonferenz deutlich verstanden wird.

Die Vorauswahl der Gruppe kann z.B. über eine grafische Benutzeroberfläche zur Steuerung der Audiokonferenz durchgeführt werden, über die den Teilnehmern der Konferenz verschiedene Rollen zugewiesen werden. Alternativ können die Rollen auch durch Eingaben über jeweilige verwendete Sprachendgeräte durchgeführt werden. Eine Rolle ist beispielsweise "stummgeschaltet", die einen Teilnehmer klassifiziert, dessen Mikrofon ausgeschaltet ist und lediglich zuhört. Eine andere denkbare Rolle ist "exklusiv", bei der lediglich der Audiodatenstrom des als "exklusiv" gekennzeichneten Sprechers ins überlagerte Mischsignal der Audiokonferenz einfließt und die Audiodatenströme der anderen Teilnehmer mittels Dämpfung komplett unterdrückt werden.

Weiterhin können den Audiodatenströmen Prioritäten zugewiesen werden, wobei die Prioritäten ebenfalls bei der Einteilung in Gruppen ausgewertet wird. Allgemein betrachtet können bei der Einteilung in Gruppen mehrere Kriterien überprüft werden, wobei die Auswertungsergebnisse miteinander logisch verknüpft werden. Beispielsweise kann einerseits die Audioaktivität betrachtet werden, zusammen mit einer Gruppenvorauswahl für einzelne Teilnehmer und unter Beachtung von vergebenen Prioritäten.
Einzelne der Klassifizierungsinformation können vorzugsweise direkt aus einem Audiodatenstrom oder dessen dekodiertem Audiosignal ermittelt werden. Andere Klassifizierungsinformation mögen durch Abfrage einer Konfiguration ermittelbar sein, wobei eine Konfiguration statisch erfolgen kann oder dynamisch, beispielsweise über eine die Audiokonferenz steuernde Browser-Anwendung.

Vorzugsweise können die Erfassung und die Auswertung der Klassifizierungsinformationen und die Einteilung in Gruppen für Zeitintervalle der Audiokonferenz erfolgen, so dass die Audiodatenströme während der Durchführung der Audiokonferenz im Zeitablauf zu verschiedenen Gruppen zugeordnet werden können. Dadurch kann die Gruppeneinteilung z.B. entsprechend einer aktuell vorkommenden Sprachaktivität der Audiodatenströme angepasst werden, so dass bei Einteilung in aktive Sprecher und inaktive Zuhörer zum jeweiligen Zeitpunkt weitestgehend immer eine den tatsächlichen Gegebenheiten entsprechende Einteilung erfolgt. Bei einer Übertragung in Sprachdatenpaketen oder in so genannten Rahmen oder Frames kann ein Zeitintervall beispielsweise genau einem Sprachdatenpaket oder einem Rahmen - oder einem ganzzahligen Vielfachen davon - entsprechen.

In einer vorteilhaften Weiterbildung der Erfindung können die Erfassung und die Auswertung der Klassifizierungsinformationen für ein Zeitintervall unter Einbeziehung der Auswertung der Klassifizierungsinformationen eines vorhergehenden Zeitintervalls durchgeführt werden. So kann verhindert werden, dass ein bisher aktiver Teilnehmer bereits bei erstmaliger Inaktivität in eine neue Gruppe sortiert wird, obwohl die Wahrscheinlichkeit hoch ist, dass es sich lediglich um eine kurze Sprechpause handelt. Durch die Einbeziehung der Auswertung der Klassifizierungsinformationen eines vorhergehenden Zeitintervalls kann vorzugsweise eine Art Hystherese erreicht werden, bei der ein Übergang von einer Gruppierung in eine aktive Gruppe zu einer Gruppierung in eine inaktive Gruppe verzögert - nach Ablauf eines oder mehrerer Zeitintervalle für die eine Inaktivität erkannt wird - durchgeführt werden kann. Mittels dieser Vorgehensweise kann sichergestellt werden, dass für einen Audiodatenstrom nicht zu häufig die Gruppenzugehörigkeit geändert wird und eine Anzahl an Gruppenwechseln über den Zeitverlauf gering gehalten werden kann.

In einer weiteren vorteilhaften Ausführungsform der Erfindung kann bei Erkennen einer wechselnden Zuordnung eines der Audiodatenströme von einer ursprünglichen Gruppe in einem ersten Zeitintervall zu einer weiteren Gruppe in einem zweiten Zeitintervall, der Audiodatenstrom für einen vordefinierten Zeitabschnitt weder der ursprünglichen noch der weiteren Gruppe zugeordnet, sondern audiodatenstromindividuell behandelt werden. Wenn sich beispielsweise eine Zuordnung in die ursprünglichen Gruppe durch eine Signalbearbeitung mittels geringer Dämpfung der Audiodatenströme und eine Zuordnung in die weitere Gruppe durch eine Signalbearbeitung mittels starker Dämpfung der Audiodatenströme auszeichnet, kann erreicht werden, dass eine Dämpfung audiodatenstromindividuell ausgehend von der für die ursprüngliche Gruppe vorgesehenen ersten, geringen Dämpfung zu der für die weitere Gruppe vorgesehenen zweiten, starken Dämpfung gemäß einer monotonen Funktion stetig und/oder in diskreten Schritten über den Zeitabschnitt verändert wird. So kann erreicht werden, dass keine abrupten, deutlich wahrnehmbaren Änderungen im Dämpfungsverlauf durchgeführt werden, sondern ein sanfter Übergang zwischen den zwei Dämpfungen erreicht wird.

So kann beispielsweise bei einem Wechsel der Gruppen ein Audiodatenstrom dynamisch von z.B. -94dB (dB: dezibel) auf -15dB angehoben, so dass kein harter, wahrnehmbarer Übergang stattfindet. Dadurch kann insbesondere sichergestellt werden, dass Hintergrundgeräusche eines Sprechers nicht auf einen Schlag erscheinen oder auf einen Schlag verschwinden. Vorzugsweise können die Verstärkungs- bzw. Dämpfungswerte frei einstellbar sein, beispielsweise mittels Konfiguration.

Vorzugsweise kann für eine ansteigende Audiosignalflanke ein Wechsel von einer hohen Dämpfung zu einer geringen Dämpfung eher schnell erfolgen, so dass keine Sprach-Nutzinformationen verloren gehen. Dagegen kann es für eine abfallende Audiosignalflanke bei einem Wechsel von einer niedrigen Dämpfung zu einer hohen Dämpfung vorteilhaft sein, einen langsamen Wechsel des Dämpfungsfaktors mit Zwischenschritten durchzuführen, um für ein sanftes Ausblenden der Audiodatenströme zu sorgen.

Bei dem erfindungsgemäßen Verfahren, bei dem Audiodatenströme in Gruppen sortiert werden, kann es vorteilhaft sein, diese Gruppierungsinformation auch für eine Reduktion des Kodieraufwands für an den Kommunikationsendeinrichtungen auszugebenden Audiokonferenzdatenströmen auszuwerten. So kann beispielsweise den Audiodatenströmen einer Gruppe von stummgeschalteten Audiodatenströmen, genau derselbe überlagerte Audiokonferenzdatenstrom übermittelt werden, da der Audiokonferenzdatenstrom auf die Überlagerung von aktiven Audiodatenströmen eingeschränkt werden kann.

Dagegen kann es sinnvoll sein, den einer Gruppe von aktiven Teilnehmern zugeordneten Audiodatenströmen jeweils einen audiodatenstromindividuell überlagerten Audiokonferenzdatenstrom zu übermitteln, in dem sein eigener Sprach-Anteil herausgefiltert wird. Somit wäre hierfür für jeden Audiodatenstrom ein eigener CODEC zur Erzeugung des jeweiligen Audiokonferenzdatenstroms notwendig, während für den vorstehend genannten Fall für die Übermittlung eines gemeinsamen Audiokonferenzdatenstroms lediglich ein CODEC für mehrere Audiodatenströme eingesetzt werden kann.

Da sich in - vorstehend erwähnten - vorteilhaften Weiterbildungen der Erfindung die Gruppenzugehörigkeit zeitlich dynamisch ändert, ergibt sich, dass man zur Einsparung von CODECs einen Audiodatenstrom bei einem Wechsel der Gruppenzugehörigkeit einem anderen Codec beaufschlagen könnte. Ein derartiges Umschalten erzeugt aber - zumindest bei zustandsbehafteten CODECs - ungewünschte und/oder unnatürlich wirkende Toneffekte, die die Qualität der Audiokonferenzdatenströme deutlich verringert.

Diese Problematik wird in dem erfindungsgemäßen Umschalteverfahren adressiert, bei dem zwischen einem ersten Kodierer und einem zweiten Kodierer bei einer zwischen dem ersten Kodierer und einem Dekodierer bestehenden Audiodatenverbindung, insbesondere zum Durchführen einer Audiokonferenz mit vorstehend genannten Merkmalen, dem Dekodierer - insbesondere einer Kommunikationsendeinrichtung - durch den ersten Kodierer - insbesondere einer Audiokonferenzeinrichtung - kodierte Audiodaten zugeführt werden. Dabei zeichnet sich der erste Kodierer dadurch aus, dass durch diesen unter Verwendung von durch eine Audiodatenhistorie beeinflussten Kodier-Parametern mittels Kodierung und/oder Signalbearbeitung aus einem, dem ersten Kodierer zugeführten ersten Audioeingangssignal die kodierten Audiodaten erzeugt werden. Darüber hinaus werden die Kodier-Parameter eines der beiden Kodierer zu einem aktuellen Zeitabschnitt jeweils abhängig durch ein zugeführtes Audioeingangssignal des aktuellen Zeitabschnitts sowie durch das Audioeingangssignal mindestens eines vorhergehenden Zeitabschnitts gebildet. In dem Umschalteverfahren wird die Audiodatenverbindung vom ersten Kodierer zum zweiten Kodierer derart umgeschaltet, dass im Rahmen des Umschaltens die Kodier-Parameter des zweite Kodierers in Übereinstimmung mit den Kodier-Parametern des ersten Kodierers gebracht werden und mit Eintritt der Übereinstimmung der Kodier-Parameter die Audioverbindung zum zweiten Kodierer umgeschaltet wird.

Auf diese Weise kann erreicht werden, dass beim Umschalten vom ersten Kodierer zum zweiten Kodierer keinerlei Qualitätsverluste auftreten, da beide Kodierer zum Umschaltezeitpunkt die gleichen, den Kodiervorgang beeinflussende Kodier-Parameter aufweisen. Somit erhält der Dekodierer durch ein kontinuierliches Verfahren kodierte Audiodaten, in denen keinerlei Unstetigkeiten im Signalverlauf auftreten. Möglicherweise ebenfalls im Dekodierer bereitgestellte Dekodier-Parameter basierend auf vorhergehenden Zeitabschnitten sind somit weiterhin gültig und können nach dem Umschalten der Kodierer weiterhin durch den Dekodierer verwendet werden. Dekodierungsfehler aufgrund des Umschaltens der Kodierer können somit verhindert werden.

Das Umschalteverfahren ist insbesondere für komprimierende CODECs von Vorteil, da in vielen bekannten, komprimierenden Kodierverfahren eine Einbeziehung von vorangegangenen Zeitabschnitten zur Erreichung eines hohen Komprimierungsfaktors erfolgt.

Ein Erreichen der Übereinstimmung der Kodier-Parametern der beiden Kodierer kann alternativ in einem aktuellen Zeitabschnitt oder in einem zukünftigen Zeitabschnitt erfolgen, wobei sich somit der Umschaltevorgang über mehrere Zeitabschnitte erstrecken kann.

Vorteilhafterweise kann nach Erreichen einer Kodier-Parameter-Übereinstimmung und dem Umschalten auf den zweiten Kodierer, Ressourcen des ersten Kodierers freigegeben werden, da beide Kodierer dieselben Audiodaten erzeugen. Somit kann die Anzahl an gleichzeitig eingesetzten Kodierern in einer Audiokonferenzeinrichtung und somit eine Gesamt-Rechenkomplexität der Audiokonferenzeinrichtung deutlich verringert werden.

In einer vorteilhaften Ausgestaltung des erfindungsgemäßen Umschalteverfahrens kann im Rahmen des Umschaltens der Audiodatenverbindung vom ersten Kodierer zum zweiten Kodierer das erste Audioeingangssignal derart modifiziert werden, dass der zweite Kodierer in einem zukünftigen Zeitabschnitt in denselben Zustand des ersten Kodierers gebracht wird. Dies wird vorteilhafterweise derart erreicht, indem vor dem eigentlichen, endgültigen Umschalten der Kodierer ein dem zweiten Kodierer zugeführtes Audioeingangssignal ebenfalls dem ersten Kodierer zugeführt wird. Auf diese Weise ist das erste Audioeingangssignal der beiden Kodierer identisch, so dass sich nach einem Verstreichen von einer vorzugsweise vorher bekannten Anzahl an Zeitabschnitten die Kodier-Parameter angleichen, bis sie zu einem Zeitabschnitt identisch werden. Ab diesem Zeitpunkt kann nun auf den zweiten Kodierer umgeschaltet und der erste Kodierer deaktiviert und/oder freigegeben werden.

In einer alternativen, vorteilhaften Ausgestaltung des erfindungsgemäßen Umschalteverfahrens kann im Rahmen des Umschaltens der Audiodatenverbindung vom ersten Kodierer zum zweiten Kodierer ein Zustand des zweiten Kodierers derart modifiziert werden, dass die Kodier-Parameter des ersten Kodierers erfasst und als Kodier-Parameter für den zweiten Kodierer gesetzt werden. Dieser Vorgang erfolgt vorzugsweise zum Ende eines Zeitabschnitts bzw. zwischen zwei Zeitabschnitten, so dass bereits beim folgenden Zeitabschnitt auf den zweiten Kodierer umgeschaltet werden kann.

Damit der Umschaltevorgang tatsächlich ohne Qualitätseinbußen durchgeführt werden kann, können der erste Kodierer und der zweite Kodierer insbesondere den gleichen Kodieralgorithmus verwenden, wobei sich vorzugsweise mögliche Konfigurationen der Kodierer gleichen. Auf diese Weise erfährt der Dekodierer beim Umschalten nichts von dem Wechsel zwischen dem ersten und den zweiten Kodierer und kann mit seinem Dekodieralgorithmus unverändert weiterarbeiten.

Bezüglich der Übereinstimmung mit den Kodier-Parametern sei darauf hingewiesen, dass es sich hierbei um eine weitgehende Übereinstimmung handelt, bei der sich zumindest diejenigen Kodier-Parameter mit dem größten Einfluss auf die Audiodaten-Qualität ähneln und/oder identisch sind. Eine vollständige Übereinstimmung der Kodier-Parameter in vollem Umfang ist durch die Erfindung nicht zwingend erforderlich, sofern dies auf die Audiodaten-Qualität oder auf die Sprachverständlichkeit keine wahrnehmbaren negativen Auswirkungen hat.

Ausführungsbeispiele der Erfindung werden an Hand einer Zeichnung näher erklärt.

Dabei zeigen in schematischer Darstellung
- Figur 1: ein Blockschaltbild einer erfindungsgemäßen Audiokonferenzeinrichtung,
- Figur 2: ein Blockschaltbild einer in der Audiokonferenzeinrichtung enthaltenen Klassifizierungseinrichtung,
- Figur 3: Funktionskurven für drei Audiodatenströme über einen jeweiligen zeitlichen Verlauf bzgl. eines Audiosignals eines der Audiodatenströme, eines daraus resultierenden Verlaufs einer Gruppierungszuordnung und eines Verlaufs eines Verstärkungsfaktors,
- Figuren 4-7: Funktionskurven für einen Audiodatenstrom über einen zeitlichen Verlauf einer Gruppierungszuordnung und eines Verlaufs eines Verstärkungsfaktors, und
- Figuren 8-12: Blockschaltbilder zur Veranschaulichung von verschiedenen Verfahrenszuständen einer Implementierung des Umschalteverfahrens im Rahmen einer Audiokonferenz.

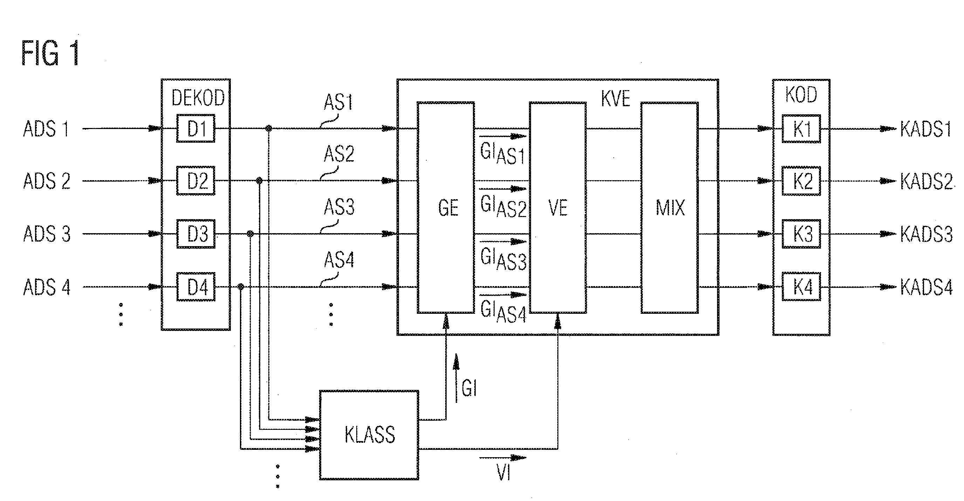

In Figur 1 ist in schematischer Darstellung eine Audiokonferenzeinrichtung dargestellt. Darin werden von nicht dargestellten Kommunikationsendeinrichtungen zugeführte Audiodatenströme ADS1, ADS2, ADS3, ADS4 einer Dekodierungseinrichtung DEKOD der Audiokonferenzeinrichtung zugeführt. Die Beschränkung auf vier Audiodatenströme ist dabei lediglich beispielhaft und eine Erweiterung ist durch drei Punkte als Auslassungszeichen in der Zeichnung angedeutet. In der Dekodierungseinrichtung DEKOD werden die eingehenden Audiodatenströme ADS1 bis ADS4 mittels Dekodierer D1, D2, D3, D4 in dekodierte Audiosignale AS1, AS2, AS3, AS4 gewandelt. Diese Audiosignale AS1 bis AS4 werden einer Konferenzverarbeitungseinrichtung KVE zugeführt, in der eine Verarbeitung der Audiosignale AS1 bis AS4 durchgeführt wird, so dass auszugebenden Audiokonferenzsignale erzeugt werden. Diese Audiokonferenzsignale werden einer Kodiereinrichtung KOD zugeführt, die eine Menge von Kodierern K1, K2, K3, K4 und evtl. weiteren Kodierern umfasst. Diese Kodiereinrichtung KOD kodiert die Audiokonferenzsignale in Audiokonferenzdatenströme KADS1, KADS2, KADS3, KADS4, die den Kommunikationseinrichtungen jeweils zugeführt werden. Die Konferenzverarbeitungseinrichtung KVE umfasst insbesondere drei hintereinander geschaltete Komponenten, die eine Bearbeitung und Analyse der eingehenden Audiosignale AS1 bis AS4 durchführen. Dies sind insbesondere eine Gruppierungseinrichtung GE, eine Verstärkungseinrichtung VE als erfindungsgemäße Signalbearbeitungseinheit und eine Mischeinrichtung MIX als erfindungsgemäße Überlagerungseinheit.

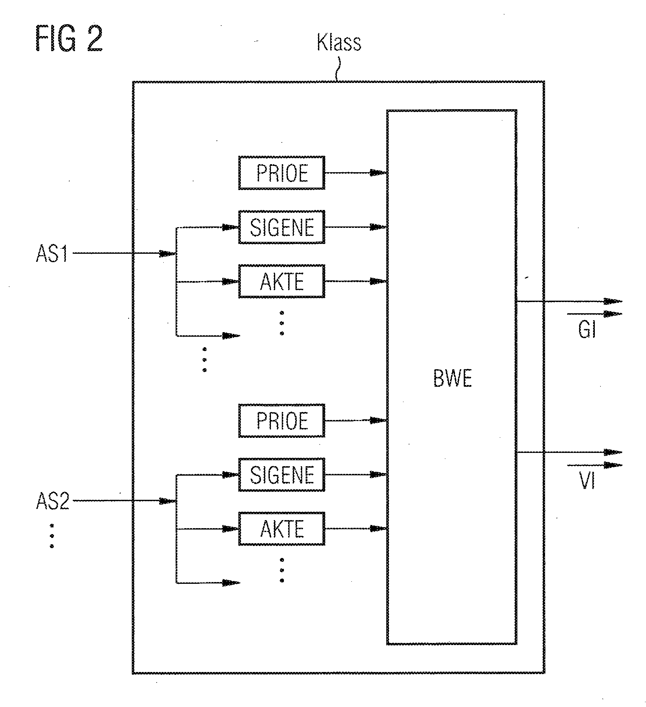

Die Gruppierungseinheit GE ist dabei zur Bildung von homogenen Gruppen von Audiodatenströmen vorgesehen und weist beispielsweise den jeweiligen Audiosignalen AS1 bis AS4 eine Gruppierung beschreibende Gruppierungsinformationen GI_{AS1}, GI_{AS2}, GI_{AS3}, GL_{AS4} zu bzw. prägt derartige Gruppierungsinformationen GI_{AS1} bis GI_{AS4} auf die jeweiligen Audiosignale AS1 bis AS4 auf, wobei die Gruppierungsinformationen GI_{AS1} bis GI_{AS4} der Verstärkungseinheit VE zusammen mit den Audiosignalen AS1 bis AS4 übermittelt werden. Weiterhin ist die Verstärkungseinheit VE für eine Signalbearbeitung der Audiodatenströme ADS1 bis ADS4 bzw. deren zugehörigen Audiosignale AS1 bis AS4 durch Anwendung eines Verstärkungs- oder Dämpfungsfaktors vorgesehen. Zur Bildung von überlagerten Audiosignalen aus den Audiosignale AS1 bis AS4 im Rahmen der Audiokonferenz wird dabei die Mischeinrichtung MIX verwendet. Als weitere Komponente der Audiokonferenzeinrichtung ist in Figur 1 eine Klassifizierungseinrichtung KLASS als erfindungsgemäße Klassifizierungsinformationserfassungseinheit dargestellt, dessen Eingänge mit den Audiosignalen AS1 bis AS4 beaufschlagt sind. Eine nähere Betrachtung der Klassifizierungseinrichtung KLASS wird in einem späteren Abschnitt an Hand Figur 2 erläutert.

Die Klassifizierungseinrichtung KLASS ist dabei dazu vorgesehen, unter Auswertung oder Analyse der eingehenden Audiosignale AS1 bis AS4 eine Gruppierung bzw. Klassifizierung der Audiosignale AS1 bis AS4 und somit auch der Audiodatenströme ADS1 bis ADS4 in bezüglich einer Auswertung von Klassifizierungsinformationen homogene Gruppen durchzuführen und diese Information mittels einer Gruppierungsinformation GI der Gruppierungseinheit GE zur Verfügung zu stellen. Darüber hinaus stellt die Klassifizierungseinrichtung KLASS der Verstärkungseinrichtung VE eine Verstärkungsfaktorinformation VI bereit, mittels der angegeben wird, inwieweit - und insbesondere um welchen Faktor - die jeweiligen Audiosignal-Gruppen verstärkt oder gedämpft werden sollen.

An Hand Figur 1 wird nun ein Ablauf des erfindungsgemäßen Verfahrens zum Durchführen einer Audiokonferenz weiter erläutert. Hierbei werden N Audiodatenströme, wobei im Folgenden lediglich die Audiodatenströme ADS1 bis ADS4 betrachtet werden, der Audiokonferenzeinrichtung zugeführt. Dabei ist zu beachten, dass, obwohl alle Audiodatenströme ADS1 bis ADS4 Sprachnutzinformation übermitteln, aus semantischer Sicht lediglich wenige Audiodatenströme einen aktiven Beitrag zur Audiokonferenz beinhalten. So kann es beispielsweise sein, dass innerhalb der Audiokonferenz zu einem Zeitpunkt lediglich ein aktiver Sprecher vorhanden ist, während alle anderen Teilnehmer zuhören und inaktiv sind. Weiterhin ist zu unterscheiden, dass zuhörende Teilnehmer evtl. trotzdem einen hörbaren Beitrag zur Audiokonferenz aufgrund von Hintergrundgeräuschen liefern, die mittels einem oder mehreren der Audiodatenströme ADS1 bis ADS4 an die Audiokonferenz übermittelt werden. Darüber hinaus kann es stumm geschaltete Audiokonferenzteilnehmer geben, die möglicherweise mittels einer statischen oder dynamisch änderbaren Konfiguration komplett stumm geschaltet werden sollen, obwohl bei ihrem jeweiligen Audiodatenstrom Audiosignale übermittelt werden. Ferner kann durch aktives Stummschalten einer Kommunikationseinrichtung durch Auslösen eines Stummschaltungsleistungsmerkmals erreicht werden, dass ein bei der Audiokonferenz eingehender Audiodatenstrom tatsächlich keinerlei Sprach- und/oder Toninformationen enthält.

Die Audiodatenströme ADS1 bis ADS4 werden nun zeitabschnittsweise mittels der Dekodiereinrichtung DEKOD in die Audiosignale AS1 bis AS4 gewandelt, wobei letztgenannte der Konferenzverarbeitungseinrichtung KVE sowie der Klassifizierungseinrichtung KLASS bereitgestellt werden. Die Klassifizierungseinrichtung KLASS erfasst und/oder ermittelt nun für den jeweiligen Zeitabschnitt eine den jeweiligen Audiosignale AS1 bis AS4 - und somit analog auch den zugeordneten Audiodatenströmen ADS1 bis ADS4 - zugeordnete Klassifizierungsinformation. Dies ist insbesondere eine Signallautstärke, ein Maximalimpuls oder eine Signalenergie des jeweiligen Audiosignals AS1 bis AS4. Eine Auswertung der erfassten Klassifizierungsinformationen kann nun durch die Klassifizierungseinheit KLASS dergestalt durchgeführt werden, dass an Hand der Signallautstärke Gruppen von Audiosignalen bzw. Audiodatenströmen gebildet werden. Dabei kann beispielsweise eine erste Gruppe von aktiven Sprechern definiert werden, in denen alle gleichzeitig sprachaktiven Konferenzteilnehmer aufgenommen werden. Darüber hinaus kann als weitere Gruppe eine zweite Gruppe von selten sprachaktiven Teilnehmer gebildet werden, bei denen hauptsächlich Hintergrundgeräusche für den jeweiligen Zeitabschnitt relevant sind. Als dritte Gruppe kann weiterhin eine Gruppe von stumm geschalteten Teilnehmern gebildet werden, die an Hand einer Konfiguration, die ebenfalls als Klassifizierungsinformation gilt, permanent auf inaktiv gesetzt sind. Bei einer derartigen Klassifikation würde man somit drei homogene Gruppen bilden, und zwar eine erste Gruppe von aktiven Teilnehmern, eine zweite Gruppe von inaktiven Teilnehmern und eine dritte Gruppe von stumm geschalteten Teilnehmern. In den jeweiligen Gruppen befinden sich jeweils nur die Audiodatenströme, die gemäß der erfassten Klassifizierungsinformation der jeweiligen Gruppe zugeschrieben werden können.

Die Gruppenzugehörigkeit der Audiosignale AS1 bis AS4 bzw. der Audiodatenströme ADS1 bis ADS4 wird nach Ermittlung durch die Klassifizierungseinrichtung KLASS mittels der Gruppierungsinformation GI an die Gruppierungseinheit GE übermittelt, damit diese für die Audiosignale AS1 bis AS4 eine Gruppierung gemäß der Gruppierungsinformation GI durchführen kann. Darüber hinaus stellt die Klassifizierungsinformation KLASS eine Verstärkungsfaktorinformation VI der Verstärkungseinrichtung VE zur Verfügung, wobei für jede Gruppe ein individueller Verstärkungsfaktorwert für die Verwendung im Rahmen einer Signalbearbeitung gesetzt werden kann. Beispielsweise kann für die Gruppe der aktiven Sprecher gesetzt werden, dass keinerlei Signalbearbeitung mittels einer Verstärkung oder Dämpfung durchzuführen ist und somit die Audiosignale dieser Gruppe unverändert bleiben. Dagegen kann für die Gruppe der inaktiven Teilnehmer eine negative Verstärkung gruppeneinheitlich gesetzt werden - beispielsweise eine Halbierung der Lautstärke um die überwiegend als Störgeräusche zu betrachtenden Tonsignale leiser zu empfangen. Für die dritte Gruppe der stumm geschalteten Teilnehmer kann eine sehr hohe Dämpfung gruppeneinheitlich definiert werden, so dass keinerlei oder kaum wahrnehmbare Signale nach Anwendung dieser Signalbearbeitung im Mischsignal zu erkennen sind.

Die Verstärkungseinrichtung VE wendet nun basierend auf der durch die Gruppierungseinheit GE übermittelten Gruppierungsinformationen.GI_{AS1} bis GI_{AS4} vorab konfigurierte oder dynamisch ermittelte gruppenspezifische Verstärkungsfaktoren für die Audiosignale AS1 bis AS4 an und gewichtet somit die Audiosignale AS1 bis AS4 der jeweiligen Gruppen entsprechend ihrer Gruppierung. Diese Gewichtung erfolgt individuell für die jeweiligen Audiosignale AS1 bis AS4 mittels individueller Signalbearbeitung. Dem Folgend werden diese gewichteten signalbearbeiteten Audiosignale mittels Mischung bzw. Überlagerung durch die Mischeinrichtung MIX zu mehreren Audiokonferenzsignalen verarbeitet, die nach einer Kodierung durch die Kodierungseinrichtung KOD als jeweilige Audiokonferenzdatenströme KADS1 bis KADS4 den Kommunikationseinrichtungen der Audiokonferenz zugeführt werden.

Der Vorteil dieser Vorgehensweise ist insbesondere, dass auf diese Weise als wichtig erachtete Beiträge der Audiokonferenz ungehindert oder sogar verstärkt an die Audiokonferenzdatenströme geliefert werden können, wohingegen als unwichtig erachtete Audiosignale gedämpft oder herausgefiltert werden können. Somit dient dieses Verfahren der Sprachklarheit und Sprachverständlichkeit der gemischten Audiokonferenzsignale an den jeweiligen empfangenden Kommunikationseinrichtungen.

Alternativ zur dargestellten Anordnung auch auf eine explizite Gruppierungseinheit GE verzichtet werden (nicht dargestellt). In diesem Fall kann die Verstärkungseinrichtung VE die Gruppierungsinformation GI und die Verstärkungsfaktorinformation VI gemeinsam auswerten und basierend darauf eine gruppenspezifische Verstärkung der Audiosignale AS1 bis AS4 durchführen. Darüber hinaus kann alternativ eine Gruppierungseinheit GE außerhalb des Audiopfads der Audiosignale AS1 bis AS4 angeordnet werden (nicht dargestellt), da eine Modifikation der Audiosignale AS1 bis AS4 zur Umsetzung der Erfindung nicht unbedingt nötig ist.

Ferner kann alternativ zur dargstellten Anordnung eine Klassifizierungseinrichtung KLASS auch die Audiodatenströme ADS1 bis ADS4 direkt als Eingangssignale verwenden - im Gegensatz zur vorstehend erläuterten Auswertung der Audiosignale AS1 bis AS4. Darüber hinaus kann vorteilhaft sein, einerseits die Audiodatenströme ADS1 bis ADS4 und andererseits die dekodierten Audiosignale AS1 bis AS4 gemeinsam der Klassifizierungseinrichtung KLASS zur Verfügung zu stellen, da einerseits Signalisierungsinformationen in den Audiodatenströmen ADS1 bis ADS4 ausgewertet werden können, zusammen mit einer Signalanalyse der Audiosignale AS1 bis AS4.

Eine Klassifizierung in der Klassifizierungseinrichtung KLASS erfolgt neben einer Analyse von absoluten Werten, insbesondere auch durch relatives Inbeziehungsetzen zwischen den Audiosignalen AS1 bis AS4 und/oder durch globale Rahmenbedingungen, die ebenfalls beachtet werden können.

Als Inbeziehungsetzen zwischen den Audiosignalen AS1 bis AS4 wird hierbei beispielsweise eine Betrachtung von relativen Beziehungen zwischen den Audiosignalen AS1 bis AS4 verstanden, bei der insbesondere vorteilhaft ist, dass dadurch beispielsweise, wenn alle Audiosignale einen geringen Pegel aufweisen, trotzdem eine Gruppierung in unterschiedliche Gruppen durchgeführt werden kann - der relativ lauteste der Audiosignale AS1 bis AS4 wird z.B. in eine Gruppe von aktiven Sprechern gesetzt -, wohin gegen bei einer rein absoluten Beurteilung evtl. alle Audiosignale in eine gemeinsame Gruppe zugeordnet würden.

Die globalen Rahmenbedingungen sind insbesondere eine maximale Obergrenze einer Gruppenmenge, wobei wenn mehr Audiodatenströme einer Gruppe zugeordnet würden als Gruppenmitglieder enthalten sein dürfen, eins oder mehrere der Audiodatenströme einer alternativen Gruppe zugeordnet werden können.

Eine genauere Betrachtung der Klassifizierungseinrichtung KLASS erfolgt folgend an Hand Figur 2.

In Figur 2 sind Analyseeinrichtungskomponenten der Klassifizierungseinrichtung KLASS schematisch dargestellt. Eingänge der Klassifizierungseinrichtung KLASS sind wiederum die Audiosignale AS1, AS2 und nicht dargstellte weitere Audiosignale - beispielsweise AS3 und AS4. Für ein jeweiliges Audiosignal AS1, AS2, ... werden verschiedene Analyseeinrichtungskomponenten aufgerufen. Dies sind insbesondere eine Signalenergieermittlungseinheit SIGNE und eine Aktivitätsermittlungseinheit AKTE, die je Audiosignal bereitgestellt werden. Weiterhin ist in Figur 2 eine Prioritätsermittlungseinheit PRIO je Audiosignal dargestellt, die zugeordnet zu jedem Audiosignal AS1 bzw. AS2 eine Gruppenvorauswahl bzw. eine vorgegebene Priorität des Audiosignals beachtet. Weitere, das jeweilige Audiosignal analysierende Komponenten sind durch drei Punkte unterhalb der Komponenten PRIOE, SIGENE und AKTE als Auslassungszeichen angedeutet.

Die Ergebnisse der jeweiligen Analyseeinrichtungen werden gemeinsam für alle Audiosignale AS1, AS2, ... einer Bewertungseinrichtung BWE als erfindungsgemäße Auswertungseinheit zugeführt. Diese Bewertungseinrichtung BWE ermittelt nun an Hand der zugeführten Informationen der Analyseeinrichtungen bezüglich Prioritäten, bezüglich der jeweiligen Signalenergie und bezüglich der jeweiligen Audioaktivität zu welcher Gruppe zu einem bestimmten Zeitabschnitt ein Signal zugeordnet gehört. So kann sich ergeben, dass beispielsweise das Audiosignal AS1 gemäß einer Bewertung durch die Bewertungseinrichtung BWE zu einer Gruppe der aktiven Sprecher zugeordnet wird, während der Audiosignal AS2 zu einer Gruppe von inaktiven Teilnehmer zugeordnet wird. Die Analyse erfolgt für jeden Zeitabschnitt erneut, wobei evtl. Analyseergebnisse zeitlich vorausgehender Zeitabschnitte für einen aktuellen Zeitabschnitt mit einbezogen werden.

Die Information bezüglich der Gruppenzugehörigkeit wird nun durch die Bewertungseinrichtung BWE mittels der Gruppierungsinformation GI an die in Figur 2 nicht dargestellte Gruppierungseinheit GE übermittelt. Darüber hinaus übermittelt die Bewertungseinrichtung BWE gruppenspezifische Verstärkungsfaktorinformationen VI an die nicht dargestellte Verstärkungseinrichtung VE. Die Verstärkungsfaktorinformation VI wird einerseits durch die Gruppenzugehörigkeiten beeinflusst, andererseits durch die Anzahl an der Klassifizierungseinrichtung KLASS anliegenden Audiosignale. So kann es Sinn machen, abhängig von der Anzahl der Konferenzteilnehmer, unterschiedliche Verstärkungsfaktoren vorzusehen, je nachdem wie viele Konferenzteilnehmer an der Audiokonferenz teilnehmen. Beispielsweise kann bei einer kleinen Konferenz lediglich eine Unterscheidung in zwei verschiedene Verstärkungsfaktoren durchgeführt werden - eine Verstärkung von 0 dB für alle aktiven und wenig aktiven Teilnehmer der Audiokonferenz und eine totale Stummschaltung mittels Setzen einer Verstärkung von -94 dB für komplett inaktive oder stumm geschaltete Teilnehmer. Bei einer größeren Teilnehmeranzahl einer Audiokonferenz mag es dagegen sinnvoll sein, eine granularere Verstärkungseinteilung durchzuführen. Hierbei können beispielsweise aktive Sprecher weiterhin ungedämpft weiter verarbeitet werden - mit 0 dB Verstärkung -, während leise Sprecher, die im Hintergrund agieren, beispielsweise eine Halbierung ihrer Lautstärke erfahren und inaktive Teilnehmer, die lediglich teilweise aktiv werden, durch eine vierfachen Dämpfung bearbeitet werden.

Eine Anzahl von Gruppen kann konfiguriert werden bzw. kann für die Konferenzen vorgegeben werden. Beispielhaft seien zwei mögliche Ausgestaltungen im Folgenden erwähnt. Hierbei wird in einer ersten Ausgestaltung eine Kategorisierung von drei Gruppen durchgeführt: Die erste Gruppe umfasst aktive Sprecher der Audiokonferenz, die zweite Gruppe Hintergrundsprecher und die dritte Gruppe stumm geschaltete oder inaktive Teilnehmer der Audiokonferenz. Die Unterscheidung zwischen aktiven Sprechern und Hintergrundsprechern kann dabei beispielsweise gemäß einer vorgegebenen Priorität durchgeführt werden oder aber durch Signalverarbeitung der Lautstärke oder der Signalenergie für einen oder mehrere Zeitabschnitte. Eine zweite Ausgestaltungsmöglichkeit ist beispielsweise eine Unterteilung in einen ersten aktiven Sprecher als erste Gruppe, einen zweiten aktiven Sprecher als zweite Gruppe, weitere aktive Sprecher als dritte Gruppe, Hintergrundsprecher als vierte Gruppe und inaktive bzw. stumm geschaltete Teilnehmer als fünfte Gruppe. Bei einer derart granularen Gruppierung können Wechsel zwischen den Gruppen evtl. ohne wahrnehmbare Veränderungen im Audiokonferenzdatenstrom durchgeführt werden, weil auf Grund der hohen Granularität eine Abstufung der Verstärkungsfaktoren lediglich mittels geringer Änderungen durchgeführt werden kann.

Ein Wechsel zwischen Gruppen kann für einen Audiodatenstrom, für jeden Zeitabschnitt der betrachtet wird, erfolgen. Hierbei kann aber zusätzlich eine Hystherese beachtet werden, durch die ein Wechsel von einer Gruppe zu einer anderen evtl. verzögert durchgeführt wird, indem überprüft wird, ob die Eingruppierung in eine weitere Gruppe über mehrere Zeitabschnitte Bestand hat. Die erwähnte Gruppenvorauswahl ist beispielsweise eine Zuordnung eines Audiomoderators permanent in eine Gruppe von aktiven Teilnehmern, so dass dieser jederzeit an der Sprachkonferenz in voller Lautstärke teilnehmen kann. Eine Priorisierung von Teilnehmern kann beispielsweise mittels Konfiguration an einer Kommunikationsendeinrichtung oder einer Datenendeinrichtung - insbesondere über eine die Audiokonferenz steuernde Anwendung auf einem Arbeitsplatzrechner - durchgeführt werden. Vorzugsweise kann zur Steuerung einer Konferenz eine Webseite in einem so genannten Browser vorgesehen sein, mittels der den einzelnen Teilnehmern Rollen zugewiesen werden können. Beispielsweise kann einzelnen Teilnehmern eine dauerhafte Inaktivität zugeordnet sein, so dass diese lediglich als Zuhörer an der Sprachkonferenz teilnehmen können. Eine derartige Vergabe von Prioritäten kann evtl. auch dynamisch im Laufe der Audiokonferenzdurchführung durch den Moderator verändert werden.

Eine Signalbearbeitung mittels Dämpfung bzw. negativer Verstärkung von Gruppenmitgliedern hat insbesondere den Vorteil, dass die Teilnehmer, die einen aktiven Beitrag zur Sprachkonferenz beitragen, deutlich wahrnehmbar bleiben, während andere Teilnehmer die lediglich Störgeräusche produzieren, leicht bzw, evtl. auch stark gedämpft werden können. Da ein An- und Ausschalten von Teilnehmern mit Hintergrundgeräuschen jedoch einen unangenehmen Effekt für die mithörenden Konferenzteilnehmer hätte, da von einem Moment auf den anderen Hintergrundgeräusche auftreten würden bzw. wieder wegfallen würden, macht es Sinn bei einem Wechsel von Aktivität zur vollständigen Inaktivität einen Teilnehmer mehrere Gruppen schrittweise durchlaufen zu lassen, wobei die jeweiligen Gruppen sich durch unterschiedliche Dämpfungsfaktoren auszeichnen. So kann ein Teilnehmer von einer Gruppe die ungedämpft ist, schrittweise über eine leicht gedämpfte Gruppe bis zu einer sehr stark gedämpften Gruppe, von Zeitabschnitt zu Zeitabschnitt, übergehen. Für die Konferenzteilnehmer ergibt sich dadurch nach Mischung ein gemischtes Audiokonferenzsignal, in dem das Hintergrundgeräusch eines der Teilnehmer langsam ausgeblendet wird.

Sollte dagegen ein Teilnehmer der vorher stumm geschaltet war plötzlich aktiv werden, so muss der Übergang zu einer aktiven Gruppe relativ schnell vollzogen werden, da ansonsten Sprachnutzinformationen dieses Teilnehmers verloren gehen würden. So ein Verhalten kann beispielsweise durch Auswertung einer gefilterten Signalenergie des jeweiligen Audiodatenstroms durchgeführt werden - nicht dargestellt in Figur 2 -, indem die Filterung und/oder Glättung durch einen FIR-Filter (FIR: Finite Impulse Response) der ersten Ordnung mit unterschiedlichen Filterungs-Koeffizienten für den Anstieg oder den Abfall einer Signalflanke durchgeführt wird. Ein Vergleich des gefilterten Audiosignals mit Referenzwerten kann somit eine Gruppierung in unterschiedliche Gruppen liefern. Erst wenn das gefilterte Audiosignal unter einem bestimmten Schwellwert gesunken ist - wobei dies aufgrund der Filterung möglicherweise erst in einem der folgenden Zeitabschnitte erfolgt -, wird ein Audiosignal in eine Gruppe umsortiert, die eine Inaktivität der Teilnehmer beschreibt.

Somit könnte Figur 2 derart erweitert werden, dass basierend auf der Audio-Energie und der Audioaktivität durch eine weitere Komponente eine geglättete und/oder gefilterte Audio-Energie ermittelt wird und basierend darauf eine Ermittlung der Klassifizierungsinformationen erfolgt.

In den folgenden Figuren werden nun verschiedene Signalverläufe von Audioeingangssignalen und Klassifizierungsinformationen dargestellt.

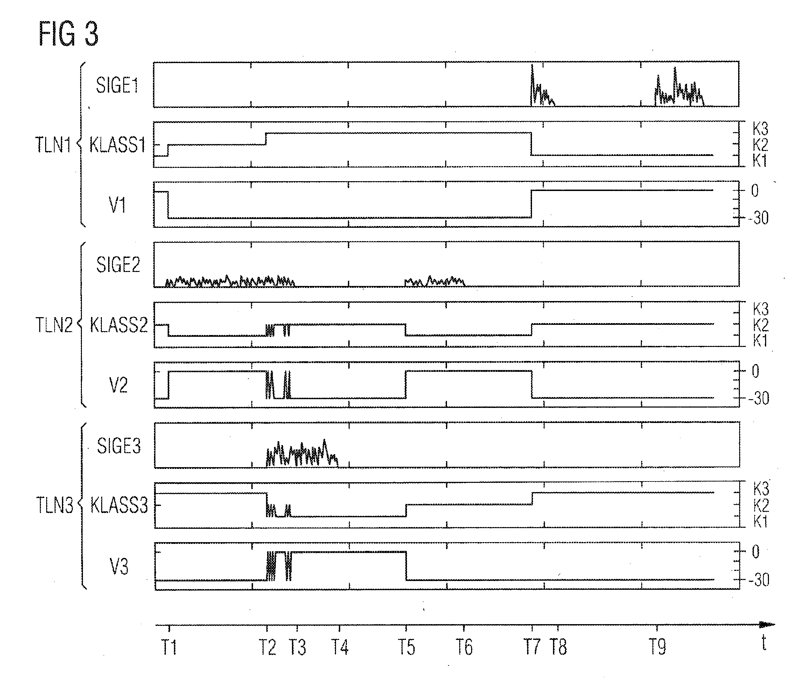

In Figur 3 sind schematisch für drei Teilnehmer TLN1, TLN2, TLN3 einer Audiokonferenz auf einer Zeitachse angetragene Funktionsabläufe dargestellt. Je Teilnehmer TLN1, TLN2, TLN3 ist beispielhaft eine Kurve der Signalenergie SIGE1, SIGE2, SIGE3, eine Funktion mit Klassifizierungsinformationen KLASS1, KLASS2, KLASS3 sowie eine Funktion über die gesetzte Audiosignalverstärkung V1, V2, V3 angegeben.

Die Kurve einer aus einem Audiodatenstrom des ersten Teilnehmers TLN1 ermittelte Signalenergie SIGE1 zeichnet sich dadurch aus, dass bis zu einem Zeitpunkt T7 keinerlei Signale auftreten, während zwischen den Zeitpunkten T7 und T8 eine von Null verschiedene Signalenergie auftritt. Zwischen dem Zeitpunkt T8 und T9 enthält der Audiodatenstrom des ersten Teilnehmers TLN1 erneut keinerlei Sprachinformationen, so dass die Signalenergie SIGE1 in diesem Zeitraum erneut Null ist. Dagegen wird zum Zeitpunkt T9 der erste Teilnehmer TLN1 erneut aktiv, was sich durch Ausschläge der Signalenergiekurve SIGE1 auswirkt.

Der Teilnehmer TLN2 zeichnet sich durch weitgehende Inaktivität auf dessen Audiodatenstrom aus, so dass die Kurve der Signalenergie SIGE2 weitgehend Null ist. Lediglich in den Zeitabschnitten T1 bis T3 sowie T5 bis T6 besitzt die Kurve der Signalenergie SIGE2 kleine Ausschläge mit geringer Amplitude. Dies kann z. B. durch mittels des Audiodatenstroms übertragende leise Sprache oder durch Eintreten von Hintergrundgeräuschen erreicht werden.

Der Teilnehmer TLN3 ist mit Ausnahme des Zeitabschnitts T2 bis T4 dauerhaft inaktiv und weist eine Signalenergie SIGE3 von Null auf. Lediglich im Zeitabschnitt T2 bis T4 beteiligt sich der dritte Teilnehmer TLN3 an der Audiokonferenz, was im Signalverlauf der Signalenergie SIGE3 durch Ausschläge der Kurve angedeutet ist.

Für Figur 3 sei angenommen, dass die Audiokonferenzeinrichtung derart konfiguriert ist, dass lediglich zwei Abstufungen von Verstärkungsfaktoren vorgesehen sind. Diese sind ein Verstärkungsfaktor von 0 dB für einen aktiven Sprecher und ein Verstärkungsfaktor von -30 dB für einen inaktiven Sprecher oder Hintergrundsprecher. Diese Werte seien dabei lediglich beispielhaft und können vorzugsweise systemweit oder individuell konfigurierbar sein. Eine Klassifizierung erfolgt in diesem Beispiel zu drei Gruppen K1, K2 und K3. Die erste Gruppe K1 repräsentiert dabei einen aktiven Sprecher bzw. einen Teilnehmer von dem erwartet wird, dass er mit höchster Wahrscheinlichkeit erneut aktiv wird. Die zweite Gruppe K2 enthält einen Teilnehmer, der zu einem Zeitabschnitt entweder gering aktiv ist oder zumindest zu einem vorhergehenden Zeitpunkt aktiv war. Die dritte Gruppe K3 repräsentiert einen vollkommen inaktiven Teilnehmer, der im Vergleich zu den anderen Audiokonferenzteilnehmern eine niedrige Wertigkeit besitzt.

Da in dem vorliegenden Beispiel lediglich drei Audiokonferenzteilnehmer TLN1, TLN2, TLN3 an der Audiokonferenz teilnehmen, wird die maximale Gruppenstärke der ersten Gruppe K1 und der zweiten Gruppe K2 jeweils auf einen einzelnen Teilnehmer gesetzt. Somit ergibt sich, dass ein aktiver Teilnehmer der zu einem Zeitpunkt der ersten Gruppe K1 zugeordnet ist evtl. in eine zweite Gruppe K2 umsortiert wird, obwohl er weiterhin aktiv ist, sofern einer der anderen Konferenzteilnehmer ein lauteres Sprachsignal abgibt und sich dies in einem höheren Pegel der jeweiligen Signalenergiekurve auswirkt.

Die Ausgangssituation sei, dass alle drei Teilnehmer TLN1, TLN2, TLN3 inaktiv sind. Dabei sei der Grundzustand der Klassifizierung in den drei Gruppen K1, K2, K3 derart, dass erste Teilnehmer TLN1 in die erste Gruppe K1 vorsortiert wird, während der zweite Teilnehmer TLN2 der zweiten Gruppe K2 zugeordnet wird. Der dritte Teilnehmer T3 sei in der Ausgangssituation zu der dritten Gruppe K3 zugeordnet. Dies kann beispielsweise einer vorab festgelegten Priorität entsprechen. Gemäß dieser Eingruppierung ist der ursprüngliche Verstärkungsfaktor für den Audiodatenstrom des ersten Teilnehmers TLN1 auf 0 dB gesetzt, währenddessen der Verstärkungsfaktor für die beiden weiteren Teilnehmer TLN2, TLN3 auf -30 dB gesetzt wird.

Die Klassifizierungsinformationen entsprechen im vorliegenden Ausführungsbeispiel eine Höhe einer Signalenergie, wie sie in den Kurven SIGE1, SIGE2, SIGE3 angetragen sind. Die erfassten Klassifizierungsinformationen werden in einer nicht dargestellten Auswertung miteinander in Relation gebracht, so dass gemäß der Auswertung eine Einteilung in die Gruppen K1 bis K3 erfolgen kann.

Da ab Zeitpunkt T1 durch Übertragung über den Audiodatenstrom des zweiten Teilnehmers TLN2 von Null verschiedene Sprachsignale anliegen und dies mittels der Signalenergiekurve SIGE2 erkennbar ist, wird der zweite Teilnehmer TLN2 in die Gruppe K1 zugeordnet, da er als einziger Teilnehmer die Klassifizierungsinformation für diese Gruppe K1 erfüllt, über einer gewissen Schwelle von Signalenergie zu sein. Der erste Teilnehmer TLN1 wird daraufhin von seiner bisherigen Gruppe K1 in die nächste Gruppe K2 zugeordnet - aufgrund einer maximalen Gruppenstärke von einem Teilnehmer in der Gruppe K1. Der dritte Teilnehmer TLN3 kann in der Gruppe K3 verbleiben.

Zum Zeitpunkt T2 wird nun zusätzlich zum zweiten Teilnehmer TLN2 der dritte Teilnehmer TLN3 sprachaktiv, wobei sein Sprachsignalenergiepegel weitestgehend deutlich höher ist als der Signalenergiepegel vom zweiten Teilnehmer TLN2. Bei Betrachtung der Signalenergiekurven SIGE2 und SIGE3 zeigt sich dabei, dass die Kurve des dritten Teilnehmers TLN3 überwiegend mit größerer Amplitude gegenüber der Kurve des zweiten Teilnehmers TLN2 verläuft, wobei einzelne Ausschläge der Signalenergiekurve SIGE2 den Signalenergiewert vom dritten Teilnehmer TLN3 übersteigen. In den Abschnitten, in denen nun der zweite Teilnehmer TLN2 die höchste Signalenergie aufweist, wird dieser Teilnehmer TLN2 der höchsten Gruppe K1 zugeordnet In diesem Fall wird der andere aktive Teilnehmer TLN3, aufgrund der maximalen Gruppenstärke von Eins, in die zweite Gruppe K2 zugeordnet. Dreht sich dagegen der Effekt um, so dass der dritte Teilnehmer TLN3 eine höhere Signalenergie aufweist, als die Signalenergie des zweiten Teilnehmers TLN2, so wird der dritte Teilnehmer TLN3 der ersten Gruppe K1 zugeordnet, während der zweite Teilnehmer TLN2 der zweiten Gruppe K2 zugeschrieben wird. Der vollkommen inaktive Teilnehmer TLN1 wird dagegen in die unterste Gruppierungsstufe K3 einsortiert.

In Figur 3 ist die Unterteilung in Zeitabschnitte für eine Analyse der Audiodatenströme bzw. der Signalenergie sehr feingranular dargestellt, so dass die Kurven der Klassifizierung KLASS1, KLASS2, KLASS3 sowie der Verstärkung V1, V2, V3 scheinbar einen kontinuierlichen Verlauf aufweisen, obwohl tatsächlich nur zu diskreten Zeitpunkten eine erfindungsgemäße Auswertung bzgl. der Klassifizierungsinformationen erfolgt, so dass auch lediglich eine zeitabschnittsweise Analyse zu den diskreten Zeitpunkten durchgeführt wird.

Gemäß der Einteilung der Teilnehmer TLN2 und TLN3 in die Gruppen K1 und K2 werden nun auch die Verstärkungsfaktoren entsprechend der Gruppeneinteilung gesetzt. So wechselt der Verstärkungsfaktor V2 für den zweiten Teilnehmer TLN2 abhängig von dessen Eingruppierung zwischen einem Verstärkungsfaktorwert von 0 dB und einem Verstärkungsfaktorswert von -30 dB. Analog und reziprok zum zweiten Teilnehmer TLN2 wird für den Teilnehmer TLN3 ebenfalls wechselnd der Verstärkungsfaktor 0 dB und -30 dB gesetzt, abhängig von dessen Eingruppierung in die Gruppen K1 bzw. K2.

Nach Beendigung des Sprachsignals des zweiten Teilnehmers TLN2 zum Zeitpunkt T3 ist vorübergehend lediglich der dritte Teilnehmer TLN3 sprachaktiv. Somit wird der dritte Teilnehmer TLN3 in die höchstpriore Gruppe K1 zugeordnet, während der zweite Teilnehmer TLN2 in die nächste zur Verfügung stehende Gruppe K2 eingeordnet wird. Der Teilnehmer TLN1 verbleibt in der Gruppe K3 wie in den vorhergehenden Zeitabschnitten.

Ab dem Zeitpunkt T4 ist keiner der drei Konferenzteilnehmer sprachaktiv. Im vorliegenden Ausführungsbeispiel bedeutet dies, dass alle Teilnehmer in der bisher vergebenen Gruppe verweilen. Dies wäre für den ersten Teilnehmer TLN1 die Gruppe K3, für den zweiten Teilnehmer TLN2 die Gruppe K2 und für den dritten Teilnehmer TLN3 die Gruppe K1. In einer nicht dargestellten, alternativen Ausgestaltung könnten dagegen alle Teilnehmer TLN1, TLN2, TLN3 der dritten Gruppe K3 der inaktiven Teilnehmer zugeordnet werden.

Dem Zeitverlauf folgend treten in Figur 3 noch drei Zeitabschnitte auf, in denen jeweils ein Teilnehmer sprachaktiv wird, währenddessen die anderen Teilnehmer keinerlei Sprache abgeben. In allen drei Fällen ergibt sich die Reaktion des Audiokonferenzsystems, das der jeweilige sprachaktive Teilnehmer der Gruppe K1 zugeordnet wird, und der bisherige der Gruppe K1 zugeordnete Teilnehmer in die Gruppe K2 sortiert wird. Ein schon in der Gruppe K3 zugeordneter Teilnehmer verbleibt in dieser Gruppe und ein der Gruppe K2 zugeordneter Teilnehmer wird, sofern er sprachinaktiv ist, der Gruppe K3 zugeordnet.

An Figur 3 ist zu Erkennen, auf welche Weise eine Bewertung bzw. Analyse der Klassifizierungsinformation erfolgt und wie eine Signalbearbeitung von Audiodatenströmen davon abhängig gemacht werden kann. Aufgrund der geringen Teilnehmerzahl im Beispiel wurde die Gruppenstärke jeweils auf ein Gruppenmitglied festgesetzt, wobei in anderen Implementierungen größere Gruppenstärken - zumindest für einige der Gruppen - sinnvoll sein können.

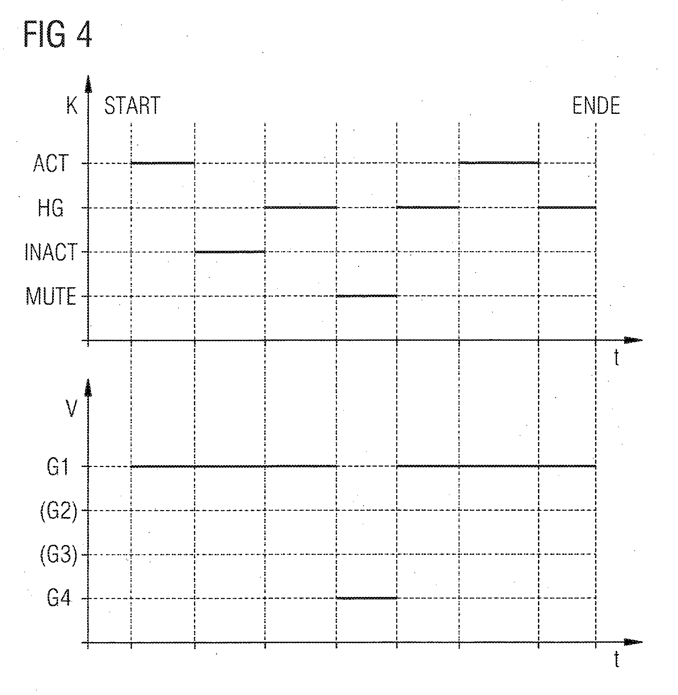

An Hand der Figuren 4 bis 7 werden nun weitere zeitliche Funktionsabläufe der Klassifizierungsinformation und der Verstärkung im Rahmen von Funktionsdiagrammen verdeutlicht. Dabei wird in diesen Diagrammen auf eine Darstellung einer Kurve der Audioaktivität verzichtet. Die Figuren 4 bis 7 unterschieden sich außerdem weiterhin von Figur 3, indem lediglich die Kurven für einen Teilnehmer der Audiokonferenz dargestellt sind und dass die jeweiligen Zeitabschnitte einen deutlich erkennbaren Abschnitt an der Zeitachse t annehmen.

Eine Klassifizierung erfolgt in den Figuren 4 bis 7 in vier Abstufungen. Eine Abstufung repräsentiert die Gruppe der aktiven Sprecher und wird mit ACT bezeichnet. Eine weitere Gruppe repräsentiert die Hintergrundsprecher einer Audiokonferenz und wird mit HG bezeichnet. Eine dritte Gruppe wird mit INACT bezeichnet und repräsentiert inaktive Teilnehmer der Sprachkonferenz. Ferner existiert noch eine vierte Gruppe MUTE, die dauerhaft stumm geschaltete Teilnehmer repräsentiert. Eine Eingruppierung eines Teilnehmers bzw. dessen Audiodatenstroms in eine der entsprechenden Kategorien wird an der y-Achse der Klassifizierungskurve K angetragen. Die x-Achse repräsentiert eine Zeitachse t, wobei lediglich zu diskreten Zeitpunkten eine Analyse oder Auswertung der Klassifizierungen erfolgt.

Unterhalb der Klassifizierungsinformationskurve K wird in einem separaten Diagramm eine Verstärkung V angetragen, wobei die Zeitachse t ebenfalls an der x-Achse des Diagramms angetragen ist und der Zeitachse t der Klassifizierungskurve K entspricht. Als y-Achse werden Verstärkungsfaktoren angetragen, die für die Figuren 4 bis 7 als G1, G2, G3 und G4 bezeichnet sind. Verstärkungsfaktor G1 sei dabei beispielsweise eine Verstärkung von 0 dB, Verstärkungsfaktor G2 eine Verstärkung von -6 dB, Verstärkungsfaktor G3 eine Verstärkung von -15 dB und Verstärkungsfaktor G4 eine Verstärkung von -94 dB, wobei die negativen Verstärkungsfaktoren erneut für eine Dämpfung der Audiosignale der Konferenz verwendet werden. Diese Verstärkungsfaktor-Werte sind jedoch lediglich beispielhaft und können je nach Implementierung - per systemweiter statischer Konfiguration oder konferenzindividueller Einstellungen - angepasst werden.

In Figur 4 ist der Verlauf der Klassifizierung K und der Verstärkung V eines Teilnehmers einer Audiokonferenz für eine Audiokonferenz mit wenigen Teilnehmern dargestellt. Auf Grund der wenigen Teilnehmer ist die Audiokonferenzeinrichtung derart konfiguriert, dass lediglich zwei Verstärkungsfaktoren gesetzt werden können. Dies sind der Verstärkungsfaktor G1 für eine Gruppierung in die Gruppen ACT, HG und INACT sowie der Verstärkungsfaktor G4 für eine Eingruppierung in die Gruppe der stumm geschalteten Teilnehmer MUTE.

Im Betrachtungszeitraum vom Zeitpunkt START bis zum Zeitpunkt ENDE wird nun der betrachtete Teilnehmer zu den Gruppen ACT, HG, INACT, MUTE zugeordnet, abhängig davon, ob er selbst sprachaktiv ist, insbesondere in Relation mit einer erfassten Sprachaktivität weiterer Konferenzteilnehmer der Audiokonferenz. Somit ergibt sich beispielsweise in einem ersten Zeitabschnitt eine Zuordnung zur Gruppe der aktiven Sprecher ACT. In einem zweiten Zeitabschnitt dagegen eine Zuordnung in die Gruppe der inaktiven Sprecher INACT. Über den Zeitverlauf wechselt nun die Zuordnung zu den Gruppen gemäß der Sprachaktivität der Teilnehmer. Darüber hinaus schaltet sich der betrachtete Teilnehmer in einem vierten Zeitabschnitt von aktiv auf stumm, was durch die Zuordnung zur Gruppe MUTE in der Klassifizierungskurve K deutlich wird. Dies kann z. B. geschehen, indem der Teilnehmer eine Taste zum Stummschalten des Eingangsmikrofons betätigt.

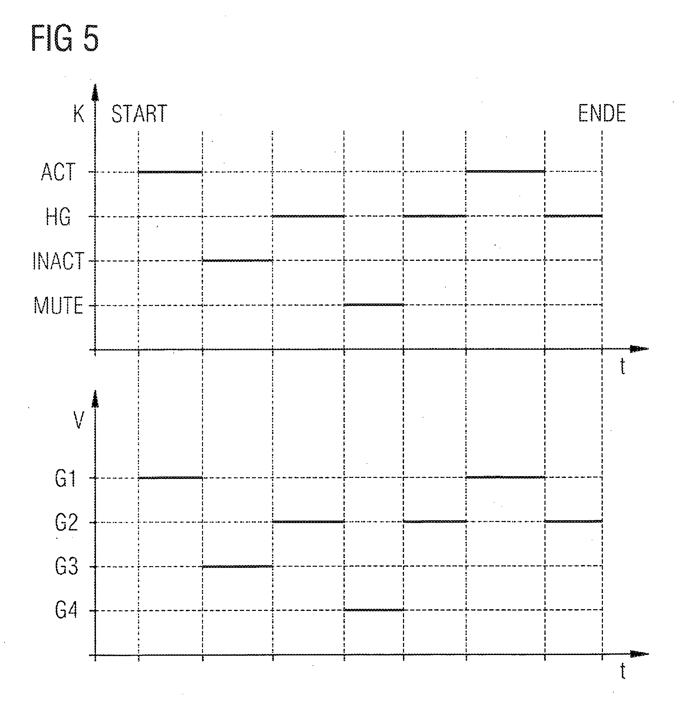

Eine sich aus der Klassifizierung K ergebende Verstärkung, die an das Audiosignal des Teilnehmers angelegt wird, wird nun für diese Zeitabschnitte in der Kurve der Verstärkung V dargestellt. Hierbei wird gemäß vorstehend genannter Rahmenbedingungen für die Gruppierungen ACT, HG und INACT eine Verstärkung G1 eingenommen. Lediglich im vierten Zeitabschnitt, während dem der Teilnehmer der Gruppe MUTE zugeordnet ist, wird durch die Audiokonferenzeinrichtung für den vorliegenden Audiodatenstrom der Verstärkungsfaktor G4 verwendet. Dies entspricht gemäß dem vorstehend genannten Wert von -94 dB, quasi einer Stummschaltung des Audiodatenstroms. Die Verstärkungswerte G2 und G3 werden bei einer Konferenz mit wenigen Teilnehmern, in diesem vorliegenden Fall nicht eingenommen, weil eine sehr granulare Unterscheidung der Verstärkungsfaktoren nicht notwendig erscheint. Dagegen wird eine feinere Aufsplittung der Verstärkungsfaktoren in Figur 5 weitergehend erläutert.

In Figur 5 wird jeder Gruppierungsstufe ACT, HG, INACT, MUTE exakt ein Verstärkungsfaktor zugewiesen. So ist der Verstärkungsfaktor G1 für Gruppenmitglieder der Gruppe ACT zugeordnet. Für Gruppenmitglieder der Gruppe HG ist der Verstärkungsfaktor G2 zugeordnet. Entsprechende Zuordnung erfolgt für die Gruppe INACT und MUTE, denen die Gruppen G3 bzw. G4 zugeordnet werden. In diesem Fall verläuft die Kurve der Verstärkungsfaktoren V - wie in Figur 5 zu erkennen - exakt überein mit der Kurve der Klassifizierungsinformationen K.

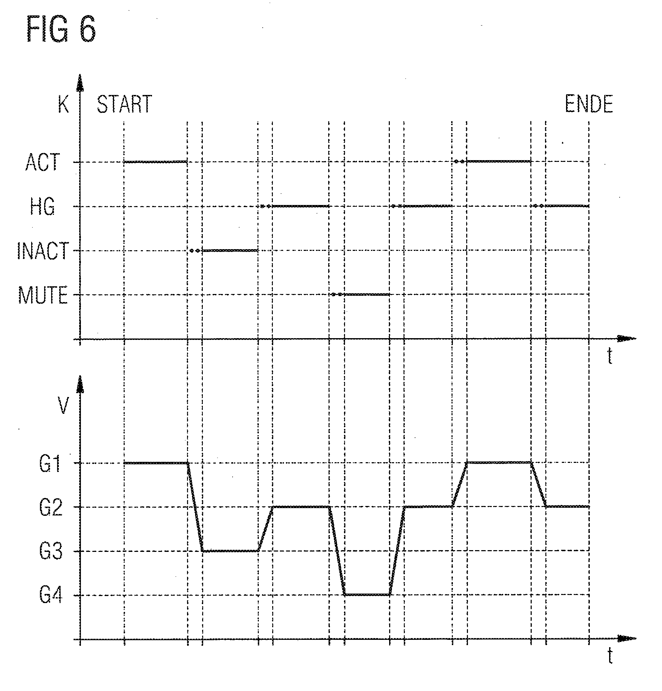

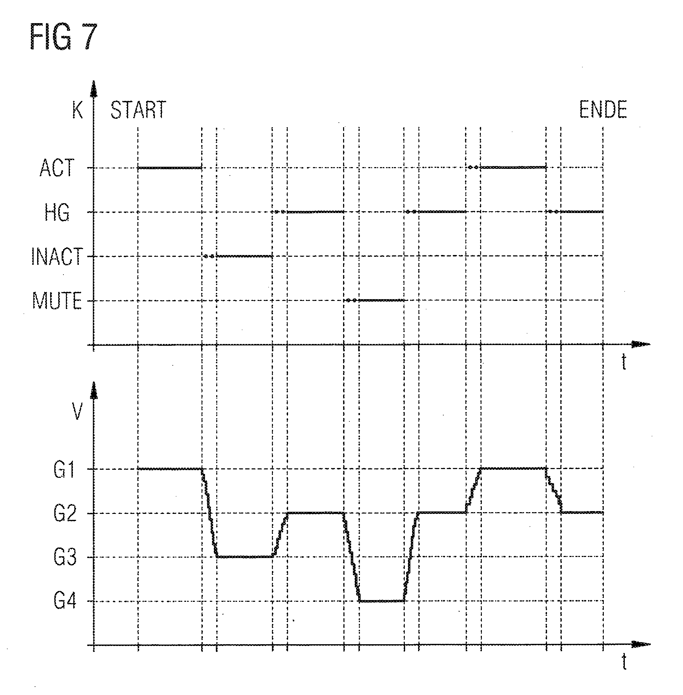

Die Figuren 6 und 7 stellen nun weitere Ausgestaltungsformen des in Figur 5 dargestellten Zeitablaufs dar. Hierbei wird insbesondere beachtet, dass ein abrupter Wechsel eines Verstärkungsfaktors möglicherweise negative Auswirkungen auf die Sprachqualität bei den Kommunikationsteilnehmern haben kann. Darum wird unter Verwendung der Figuren 6 und 7 ein sanfterer Übergang zwischen zwei Verstärkungsfaktoren erläutert. Dies sieht dergestalt aus, dass bei einem Wechsel von einer ersten Gruppe in eine zweite Gruppe für einen kurzen Zeitabschnitt der Teilnehmer nicht dieser Gruppe zugeordnet wird, sondern kurzfristig ohne Gruppenzugehörigkeit verwaltet wird. Dies ist in der Kurve K durch eine punktierte Linie angedeutet. Während dieser Zeit kann der Verstärkungsfaktor zwischen einem Startverstärkungsfaktor bis zu einem Zielverstärkungsfaktor stetig und gleichförmig geändert werden. Somit ergibt sich in Figur 6 in der Kurve V eine stetige Kurve, wobei zwischen zwei Verstärkungsfaktorwerten beispielsweise eine direkte gerade Verbindung besteht, an Hand der die Verstärkungsfaktoren abgeändert werden. Somit ergibt sich ein kontinuierlicher Verlauf der Verstärkungsfaktoren, der sich vorteilhaft auf die Sprachqualität auf die Audiokonferenz auswirkt.

In Figur 7 ist eine ähnliche Ausgestaltung dargestellt, die sich von Figur 6 jedoch dadurch unterscheidet, dass bei einem Übergang bei einem Verstärkungsfaktor zu einem Anderen eine Abänderung des Verstärkungsfaktors in diskreten Schritten erfolgt. Durch die Beschränkung auf diskrete Verstärkungsfaktorwerte kann sich die Komplexität der Verstärkungsanpassung verringern.

Darüber hinaus ist evtl. vorteilhaft, eine Verstärkungsanpassung über unterschiedliche Zeitabschnitte durchzuführen, je nachdem, ob es sich um einen Sprung zwischen direkt nebeneinander liegenden Verstärkungsfaktoren handelt - also z.B. ein Wechsel von -6 dB zu -15 dB bei einer Abstufung von 0, -6, -15, -94 dB - oder ob es sich um eine deutliche Änderung eines Verstärkungsfaktors handelt- also z.B. ein Wechsel von -6 dB zu -94 dB. Darüber hinaus kann beachtet werden, ob es sich um eine Änderung in Richtung einer Dämpfung oder in Richtung einer Verstärkung handelt, wobei bzgl. der sich ergebenden Audioqualität vorteilhaft sein kann, eine Änderung des Verstärkungsfaktors in Richtung einer Dämpfung langsamer zu vollziehen, als eine Änderung in Richtung einer positiven Verstärkung. Auf diese Weise kann ein homogenes Sprachbild erzeugt werden und trotzdem ein schnelles Einschalten eines Sprachkanals durchgeführt werden, sofern ein Teilnehmer plötzlich sprachaktiv wird.

Die Einteilung in homogene Gruppen gemäß einer Klassifizierung ist insofern vorteilhaft, als dass dadurch die Komplexität der Audiokonferenzeinrichtung reduziert werden kann. Dies ist insbesondere der Fall, wenn die an die Kommunikationsendeinrichtungen auszugebenden Audiokonferenzdatenströmen für inaktive Gruppen mittels ihrer, Audiodatenströmen zugeordneten Kommunikationsendeinrichtungen aus gruppenkonform überlagerten signalbearbeiteten Audiodatenströmen gebildet wird, so dass für alle einer Gruppe zugeordneten Teilnehmer lediglich einmal eine Kodierung und lediglich einmal eine Überlagerung durchgeführt werden braucht und die Ergebnisse der Kodierung und der Überlagerung für alle Teilnehmer der Gruppe zur Verfügung gestellt werden kann.

Vorzugsweise kann die Klassifizierung bzw. Gruppierung und das Verstärkungsverhalten für die jeweiligen Gruppen abhängig von der Größe der Audiokonferenz durchgeführt werden. So kann beispielsweise mittels vorkonfigurierten Tabellen definiert werden, wie viele Gruppen für wie viele Konferenzteilnehmer gebildet werden sollen. Es kann auf diese Weise z.B. erreicht werden, dass für Konferenzen mit 3 Teilnehmern, alle Teilnehmer in eine Gruppe sortiert werden sollen, bei Konferenzen mit 4-8 Teilnehmern, drei Gruppen zur Verfügung stehen und bei mehr als 9 Teilnehmern fünf Gruppen. Vorzugsweise erfolgt der Übergang im Zeitverlauf dynamisch, so dass bei Aufnahme eines weiteren Teilnehmers zu einer Konferenz mit 8 Teilnehmern auch ein Übergang von einer Einteilung in drei Gruppen zu einer Einteilung in fünf Gruppen erfolgt.

Analog dazu können vorzugsweise auch die Verstärkungsfaktorwerte abhängig von der Anzahl der Konferenzteilnehmer dynamisch angepasst werden, so dass bei einer Gruppierung in drei Gruppen für 4-8 Teilnehmer, für 4-5 Teilnehmer andere Verstärkungsfaktorwerte verwendet werden als für 6-8 Teilnehmer.

Die Erfindung ist weiterhin insbesondere vorteilhaft, als dass auch alle Teilnehmer einer Audiokonferenz in lediglich eine einzige Gruppe einsortiert werden können - beispielsweise eine Gruppe von aktiven Sprechern. Auf diese Weise kann man vorzugsweise für Konferenzen mit wenigen Teilnehmern erreichen, dass alle Teilnehmer-Audiosignale gemischt werden, wobei alle Audiosignale die gleiche Signalbearbeitung - oder keine Signalbearbeitung - erfahren. Somit ergeben sich einerseits eine Kompatibilität zu bestehenden Systemen und andererseits eine geringe Komplexität für derartige Konferenzen mit wenigen Teilnehmern. Außerdem kann - wie vorstehend genannt - bei einem übersteigen einer vorgegebenen Anzahl an Konferenzteilnehmern die Anzahl der Gruppen erhöht werden.

In einer Ausgestaltungsform der Erfindung kann vorzugsweise als eine der Klassifizierungsinformationen eine gedämpfte und/oder geglättete Signalenergie eines der Audiodatenströme mittels Filterung des Audiodatenstroms durch ein Filter mit endlicher Impulsantwort - ein so genannter FIR-Filter - ermittelt wird. Beispielsweise kann mittels eines Tiefpassfilters, angewendet auf die Signalenergie, erreicht werden, dass sich ein trägeres Verhalten bzgl. der Neugruppierung der Konferenzteilnehmer ergibt. Alternativ oder zusätzlich kann beispielsweise ein FIR Filter erster Ordnung eingesetzt werden, vorzugsweise mit unterschiedlichen, so genannten Attack- und Release-Koeffizienten, so dass ein Wechsel in eine höhere Kategorie mit geringerer Dämpfung schneller vollzogen werden kann als umgekehrt, da ein FIR-Filter ein langsames Abfallen der Signalenergie über mehrere Zeitabschnitte erlaubt.

Die gemäß Figuren 1-7 erläuterten Ausführungsformen sind insbesondere vorteilhaft, als dass dynamisch eine Lautstärkeanpassung oder eine weitergehende Signalbearbeitung durchgeführt werden kann, so dass sich die Sprachverständlichkeit für die Teilnehmer der Audiokonferenz erhöht. Darüber hinaus kann die Komplexität aufgrund der Gruppierung der Audiodatenströme und der Betrachtung von lediglich wenigen Gruppen gering gehalten werden. Darüber hinaus kann eine Verarbeitungskomplexität in einer Audiokonferenzeinrichtung anhand der folgenden Figuren erläuterten Vorgehensweise reduziert werden, da eine Anzahl an gleichzeitig eingesetzten CODECs verringert werden kann. Wie eine Einsparung von CODECs vollzogen werden kann, wird dabei im Folgenden erläutert.

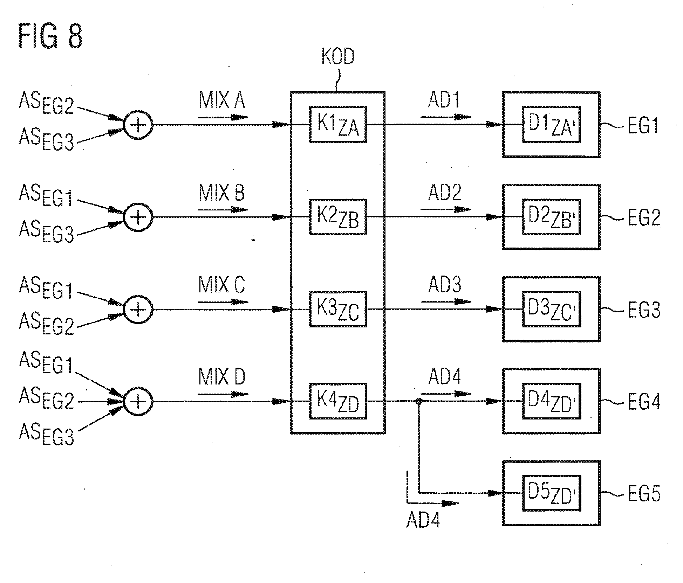

Die Figuren 8-12 zeigen in schematischer Darstellung Blockschaltbilder zur Veranschaulichung von verschiedenen Verfahrenszuständen des erfindungsgemäßen Umschalteverfahrens im Rahmen einer Audiokonferenz. Die Audiokonferenz ist exemplarisch für fünf Teilnehmern mit ihren Kommunikationsendeinrichtungen EG1, EG2, EG3, EG4, EG5 dargestellt. Jede der Kommunikationsendeinrichtungen EG1, EG2, EG3, EG4, EG5 umfasst dabei einen Dekodierer D1, D2, D3, D4, D5 zur Konvertierung empfangener Audidaten AD1, AD2, AD3, AD4, die von einer Kodiereinrichtung KOD einer Audiokonferenzeinrichtung mit ihren Kodierern K1, K2, K3, K4 übermittelt werden. Die Kommunikationsendeinrichtungen EG1, EG2, EG3, EG4, EG5 sind hierbei beispielsweise Sprachendgeräte wie Telefone oder Telefonie-Applikationen auf einem Arbeitsplatzrechner, die weiterhin jeweils zusätzlich einen nicht dargestellten Kodierer aufweisen, um Audiodaten aus mittels eines Mikrofons aufgenommenen Sprachsignalen zu erzeugen und der Audiokonferenzeinrichtung paketorientiert oder leitungsvermittelt zur Verfügung zu stellen.

Die Audiokonferenzeinrichtung besitzt eine nicht dargestellte Dekodiereinrichtung zum Wandeln der von den Kommunikationsendeinrichtungen EG1, EG2, EG3, EG4, EG5 bereitgestellten Audiodaten in Audiosignale AS und eine lediglich durch das "+"-Zeichen angedeutete Mischeinrichtung zum Mischen bzw. Überlagern dieser Audiosignale AS. Evtl. erfolgt weiterhin eine vorstehend genannte Einteilung der Kommunikationsendeinrichtungen EG1, EG2, EG3, EG4, EG5 bzw. deren Audiodaten oder Audiosignale AS in homogene Gruppen je nach Audioaktivität der Teilnehmer. Weiterhin werden die Audiosignale evtl. vorher gewichtet oder mittels Signalbearbeitung im Signalverlauf verändert, beispielsweise gedämpft oder verstärkt (nicht dargestellt). Als Ergebnis der Mischeinrichtung ergeben sich Mischaudiosignale MIXA, MIXB, MIXC, MIXD, die teilweise spezifisch für die Ausgabe an einer der Kommunikationsendeinrichtungen EG1, EG2, EG3, EG4, EG5 und teilweise gemeinsam für die Ausgabe an mehreren der Kommunikationsendeinrichtungen EG1, EG2, EG3, EG4, EG5 gebildet werden.

Bezüglich der Nomenklatur werden an den Bezugszeichen "AS" der Audiosignale durch tieferstellen der Bezeichnung der Kommunikationsendeinrichtungen EG1, EG2, EG3, EG4, EG5 angedeutet, von welcher der Kommunikationsendeinrichtungen EG1, EG2, EG3, EG4, EG5 das jeweilige Audiosignal stammt. Ein, eine Wertemenge von Kodier-Parametern repräsentierender Zustand eines der Kodierer K1, K2, K3, K4 wird als ZA, ZB, ZC, ZD bezeichnet, wobei der gerade aktive Zustand ZA, ZB, ZC, ZD in den Figuren 8-11 dem jeweiligen Kodierer K1, K2, K3, K4 als tiefgestellter Zusatz - also z.B. K1_{ZA}, K2_{ZB} - angeben ist. Als einen Zustand beeinflussende Kodier-Parameter seinen dabei einerseits Parameter für eine Synthese von Tönen, aber insbesondere auch Zwischenergebnisse einer Berechnung im Rahmen eines Kodiervorgangs zu verstehen.

Kodier-Parameter sind in den Figuren nicht weiter dargestellt und sind beispielsweise ein oder mehrere Tabellen von Einstellungsparametern für einen CODEC. Eine Wertemenge von allen Tabelleneinträgen aller Kodier-Parameter inkl. der Zwischenergebnisse der Kodierberechnung wird im Ausführungsbeispiel dabei als Zustand bezeichnet, wobei eine Änderung mindestens eines Tabelleneintrags oder eines Zwischenergebnisses als Zustandswechsel bezeichnet wird.

Ein, einem Zustand eines Kodierers entsprechender Zustand - also eine Wertemenge von Kodier-Parametern - ergibt sich auch bei den Dekodierern D1, D2, D3, D4, D5 der Kommunikationsendeinrichtungen EG1, EG2, EG3, EG4, EG5. Auch hier wird der Zustand als tiefgestellter Zusatz beim Dekodierer-Bezugszeichen angegeben, wobei ein einem Kodierer entsprechender Dekodier-Zustand mit einem Strich hinter dem Zustands-Bezugszeichen angedeutet wird. D.h. der Dekodierer D1, der mit dem Kodierer K1 in Verbindung steht, der wiederum den Zustand ZA eingenommen hat und somit als Kodierer Kl_{ZA} bezeichnet wird, wird somit als Dekodierer D1_{ZA}' bezeichnet.

Die Kodierer und Dekodierer sind vorzugsweise derart ausgestaltet, dass sie zeitlich vorausgegangene Analysewerte mit in die Analyse eines aktuellen Sprachabschnitts einfließen lassen. In einer Ausgestaltungsform verwenden die Kodierer und Dekodierer ein CELP-Verfahren (CELP: Code-book Excited Linear Predictive Coding). Ein Beispiel wäre ein CODEC gemäß der ITU Empfehlung G.728 (ITU: International Telecommunication Union).

Ein Zustand repräsentiert beispielsweise eine gespeicherte Tabelle von Kodier-Parametern und Zwischenergebnissen der Kodier-Berechnung, die sich aufgrund einer Analyse von vorhergehenden Audiosignal-Zeitabschnitten ergeben hat und für eine verbesserte Kodierung/Dekodierung von einem aktuellen Audiosignal-Zeitabschnitt verwendet wird. Ein Verlust dieser für den jeweiligen CODEC notwendigen Kodier-Parameter und/oder Zwischenergebnisses oder ein nicht algorithmus-konformes Abändern dieser Werte würde sich dabei auf die erzeugtem Audiosignale bei der Ausgabe an einer Kommunikationsendeinrichtungen negativ und üblicherweise wahrnehmbar auswirken, da diese Kodier-Parameter und die Zwischenergebnisse gerade dafür eingeführt wurden, unter Reduktion der zu übermittelnden Daten weiterhin eine zumindest bessere Sprachqualität zu erreichen, als sie bei gleicher Übertragungsbandbreite ohne Verwendung historischer Kodier-Parameter erreichbar ist.

In den Figuren 8-12 sind die Verbindungen zwischen Kodierern und Dekodierern als Linien zwischen diesen Komponenten dargestellt, wobei eine Übertragungsrichtung in Richtung der Übertragung durch Pfeilspitzen angedeutet ist. Diese Verbindungen können dabei auf paketorientierten und/oder leitungsvermittelten Prinzipien beruhen.

Figur 8 stellt die Ausgangssituation für alle der folgenden Figuren dar. In einer aufgebauten Audiokonferenz zwischen den Kommunikationsendeinrichtungen EG1, EG2, EG3, EG4, EG5 seien Teilnehmer der Kommunikationsendeinrichtungen EG1, EG2, EG3 als aktive Sprecher kategorisiert, während Teilnehmer der Kommunikationsendeinrichtungen EG4, EG5 reine Zuhörer seien. Die maximale Gruppenstärke der Gruppe der aktiven Sprecher sei beispielsweise für die Figuren 8-10 die Anzahl von 3. Die Gruppe der reinen Zuhörer sei in ihrer Anzahl unbegrenzt. Für die Kommunikationsendeinrichtungen EG1, EG2, EG3 der aktiven Sprecher wird ein jeweils individuell gemischtes Konferenzsignal gebildet, in dem jeweils der Sprechanteil des Teilnehmers der Kommunikationsendeinrichtung, für die das Mischaudiosignal bestimmt ist, herausgefiltert wird (nicht dargestellt). Das individuelle Mischaudiosignal für die erste Kommunikationsendeinrichtung EG1 ist MIXA, für die zweite Kommunikationsendeinrichtung EG2 MIXB und für die dritte Kommunikationsendeinrichtung EG3 MIXC. Das Mischaudiosignal MIXA ist dabei vorzugsweise eine Überlagerung der aufgenommenen Audiosignale die durch die Kommunikationsendeinrichtungen EG2 und EG3 bereitgestellt wird. Das Mischaudiosignal MIXB ist vorzugsweise eine Überlagerung der aufgenommenen Audiosignale der Kommunikationsendeinrichtungen EG1 und EG3, während das Mischaudiosignal MIXC eine Überlagerung der aufgenommenen Audiosignale AS_{EG1} und AS_{EG2} der Kommunikationsendeinrichtung EG1 und EG2 ist. Darüber hinaus wird eine Überlagerung aller Audiosignale aller aktiven Teilnehmer gebildet - d.h. AS_{EG1} + AS_{EG2} + AS_{EG3}, sofern in dieser Nomenklatur ein "+" als Überlagerungsoperation interpretiert wird -, wobei das überlagerte Mischaudiosignal als MIXD bezeichnet wird.

Das Mischaudiosignal MIXA wird dem Kodierer K1 zugeführt, so dass dieser zu einem bestimmten Zeitpunkt Kodier-Parameter gemäß Zustand ZA aufweist. Analog ergibt sich für den Kodierer K2 durch Beaufschlagung mit Mischaudiosignal MIXB ein Zustand ZB, für den Kodierer K3 durch Beaufschlagung mit Mischaudiosignal MIXC ein Zustand ZC und für den Kodierer K4 durch Beaufschlagung mit Mischaudiosignal MIXD ein Zustand ZD. Die Kodierer K1, K2, K3, K4 erzeugen die Audiodatenströme AD1, AD2, AD3, AD4, wobei die Nummerierung der der Kodierer K1, K2, K3, K4 entspricht. Die Audiodatenströme AD1, AD2, AD3 werden nun jeweils individuell den Kommunikationsendeinrichtungen EG1, EG2, EG3 übermittelt, woraufhin die jeweiligen Dekodierer D1, D2, D3 eine Dekodierung durchführen und den jeweiligen Zuständen ZA, ZB, ZB zugehörigen Dekodier-Zustände ZA', ZB', ZC' einnehmen.

Das Mischaudiosignal MIXD als Überlagerung der Audiosignale, AS_{EG1} + AS_{EG2} + AS_{EG3} wird dem Kodierer K4 zugeführt, der daraufhin den, dessen Kodier-Parameter repräsentierenden Zustand ZD einnimmt. Die durch den Kodierer K4 generierten Audiodaten AD4 werden nun den beiden Kommunikationsendeinrichtungen EG4 und EG5 zugeleitet, wobei deren individuellen Dekodierer D4 bzw. D5 jeweils denselben Dekodier-Zustand ZD' einnehmen.

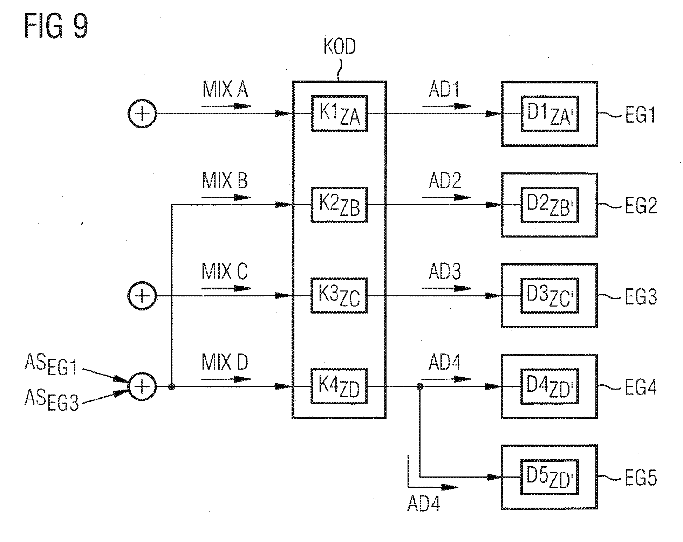

Anhand Figur 9 wird nun im Folgenden, ausgehend von dem in Figur 8 dargestellten Systemzustand, ein Wechsel einer Sprachaktivität des Teilnehmers der Kommunikationsendeinrichtung EG2 erläutert, wobei der vorher als aktiver Sprecher angesehene Teilnehmer der Kommunikationsendeinrichtung EG2 inaktiv wird und einer entsprechenden Gruppe von inaktiven Teilnehmern zugeordnet wird. Es ergibt sich nun die Möglichkeit, analog zum Zusammenfassen der beiden bisherigen inaktiven Teilnehmer der Kommunikationsendeinrichtung EG4 und EG5 auch den neuen inaktiven Teilnehmer der Kommunikationsendeinrichtung EG2 durch gemeinsam erzeugte Audiodaten zu versorgen. Ein abruptes, direktes Umschalten des Dekodierer-Eingangs des Dekodierers D2 auf den Ausgang des Kodierers K4 ist aber - ohne Anwendung des erfindungsgemäßen Umschalteverfahrens - lediglich mit Einbußen in der Sprachqualität möglich, da der Kodierer K4 mit dem Zustand ZD einen sich vom Zustand ZB des Kodierer K2 unterscheidenden Zustand aufweist und auch der Zustand ZB' des Dekodierers D2 nicht dem Zustand des Kodierers K4 entspricht.

Mittels einer Ausgestaltung des erfindungsgemäßen Verfahrens, wird nun der Zustand ZB des Kodierers K2 und somit auch der Zustand ZB' des Dekodierer D2 derart verändert, dass sich der Zustand ZB an den Zustand ZD und der Zustand ZB' an den Zustand ZD' annähert. Erfolgt eine Übereinstimmung dieser Zustandspaare, dann kann das Ausgangssignal des Kodierers K4 dem Eingang des Dekodierers D2 zugeführt werden, ohne dass wahrnehmbare Qualitätsverluste auftreten.

Wie in Figur 9 dargestellt, wird nun dasselbe Mischaudiosignal, dass unter der Bezeichnung MIXD dem Kodierer K4 zugeführt wird, ab einen Zeitabschnitt und für alle darauf folgende Zeitabschnitte ebenfalls dem Kodierer K2 zugeführt. Weiterhin besitzen die beiden Kodierer K2 und K4 bei dem Zeitabschnitt aufgrund ihrer gespeicherten Kodier-Parameter, die sich aus den Audiosignalverläufen aus vorhergehenden Zeitabschnitten ergeben haben, sich unterscheidende Zustände ZB und ZD. Wird nun aber davon ausgegangen, dass für einen CODEC wie den Kodierern K2 und K4 weiter zurückliegende Zeitabschnitte einen deutlich geringeren Einfluss auf die Kodier-Parameter haben als ein aktueller oder ein gerade vergangener Zeitabschnitt, so ergibt sich, dass sich die Kodier-Parameter und somit der Zustand ZB des Kodierers K2 an die Werte der Kodier-Parameter des Kodierers K4 annähern, bis sich zu einem zukünftigen Zeitabschnitt exakte oder unter Beachtung von Toleranzen evtl. weitgehende Übereinstimmung der Kodier-Parameter und somit auch eine Übereinstimmung der Zustände ZB und ZD der Kodierer K2 und K4 einstellt.

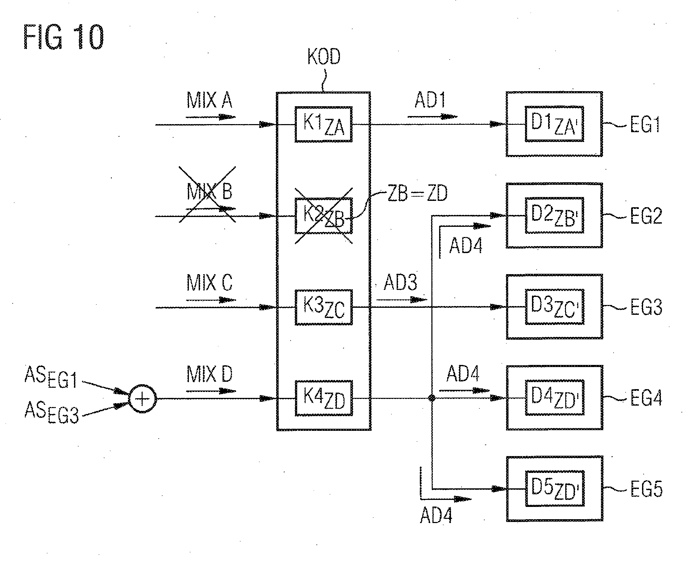

Dies ist im Zeitabschnitt, der Figur 10 zugrunde liegt, erfüllt. In diesem Zeitabschnitt hat sich Zustand ZB des Kodierers K2 dem im selben Zeitabschnitt eingenommen Zustand ZD vom Kodierer K4 angenähert, so dass ein Umschalten des Eingangs des Dekodierers D2 auf den Ausgang des Kodierers K4 ohne Qualitätsprobleme möglich wird. Gemäß der Erfindung wird nun im aktuellen oder in einem zukünftigen Zeitabschnitt die Audioverbindung zur Kommunikationsendeinrichtung EG2 dergestalt umgeschaltet, dass vom Kodierer K2 als ursprüngliche Quelle der Audioverbindung zum Kodierer K4 umgeschaltet wird. Der Kommunikationsendeinrichtung EG2 und somit der Dekodierer D2 erhält somit über die Audiodatenverbindung die Audiodaten AD4 zugeführt, genauso wie die Kommunikationsendeinrichtungen EG4 und EG5. Der eingenommene Zustand des Dekodierers D2 stimmt weiterhin mit dem jeweiligen Zustand ZD' der Dekodierer D4 und D5 überein.

Um Rechenaufwand und Kodier-Ressourcen in der Kodiereinrichtung KOD einzusparen, kann nun der Kodierer K2 deaktiviert, freigegeben oder entfernt werden. Ein Zuführen des Mischsignals MIXB kann somit ebenfalls beendet werden. Beides ist in Figur 10 durch ein Durchstreichen der Bezugszeichen MIXB und K2 angedeutet.

Das vorstehend erläuterte Umschalteverfahren ist insbesondere für dynamisch zusammengestellte Kodiereinrichtungen vorteilhaft, bei denen Kodierer dynamisch den Audiosignalen der Audiokonferenz zugewiesen werden und somit auch dynamisch wieder freigegeben werden können. Auf diese Weise lässt sich mittels Umschalten auf einen alternativen Kodierer evtl. ein Kodierer einsparen. Ein Einsparen oder Inaktivieren eines Kodierers ist aber insofern vorteilhaft, als dass dadurch der Verarbeitungsaufwand in der Kodiereinrichtung reduziert werden kann, insbesondere bei einem Einsatz von komplexen CODECs, die hohe Anforderungen an Rechenleistung erfordern.

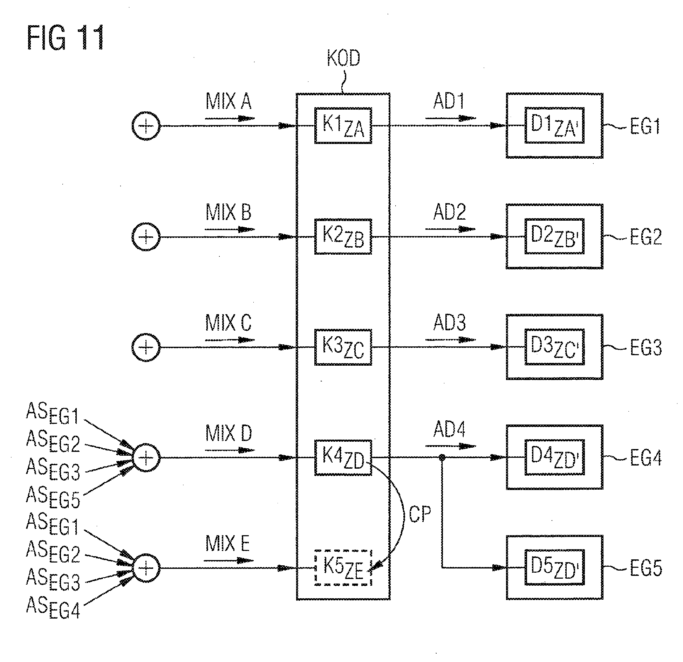

In Figur 11 ist eine weitere Ausgestaltung des erfindungsgemäßen Umschalteverfahrens ausgehend von dem eingenommenen Verfahrensstand von Figur 8 veranschaulicht. Die maximale Gruppenstärke der Gruppe der aktiven Sprecher sei beispielsweise 4. Die Gruppe der reinen Zuhörer sei unbegrenzt. Hierbei wird der Teilnehmer der Kommunikationsendeinrichtung EG5 aktiv und benötigt deshalb die Generierung eines spezifisch gemischten Audiosignals, in dem alle Audioanteile der übrigen Kommunikationsendeinrichtung EG1, EG2, EG3, EG4 überlagert werden. Daher wird in der Kodiereinrichtung KOD ein neuer, spezifisch für eine Audioverbindung zur Kommunikationsendeinrichtung EG5 vorgesehener Kodierer K5 generiert bzw. aktiviert, dem ein Mischsignal MIXE mit einer Überlagerung der Audiosignale AS_{EG1} + AS_{EG2} + AS_{EG3} + AS_{EG4} zugeführt wird. Aufgrund des neu Erzeugens des Kodierers K5 - und damit auch seines neuen Zustands ZE -, wird dieser im Unterschied zu den als durchgezogene Rechtecke dargestellten Kodierern K1 bis K4 als strichliniertes Rechteck in Figur 11 veranschaulicht.

Würde nun lediglich der Kodierer K5 erzeugt, ohne dass seine Kodier-Parameter und somit sein Zustand angepasst würden, würde sich beim Dekodierer D5 eine Unstetigkeit seiner Dekodier-Parameter ergeben, die sich in eine Verringerung der Sprachqualität bzw. in Dekodierfehlern auswirken würde. Um dies zu vermeiden, wird mit den im Folgenden beschriebenen Verfahrensschritten erreicht, dass der Zustand des Dekodierers D5 und somit dessen Dekodier-Parameter weiterhin kontinuierlich verändert werden, obwohl die zum Dekodierer D5 verlaufende Audioverbindung vom Kodierer K4 zum Kodierer K5 abrupt umgeschaltet wird.

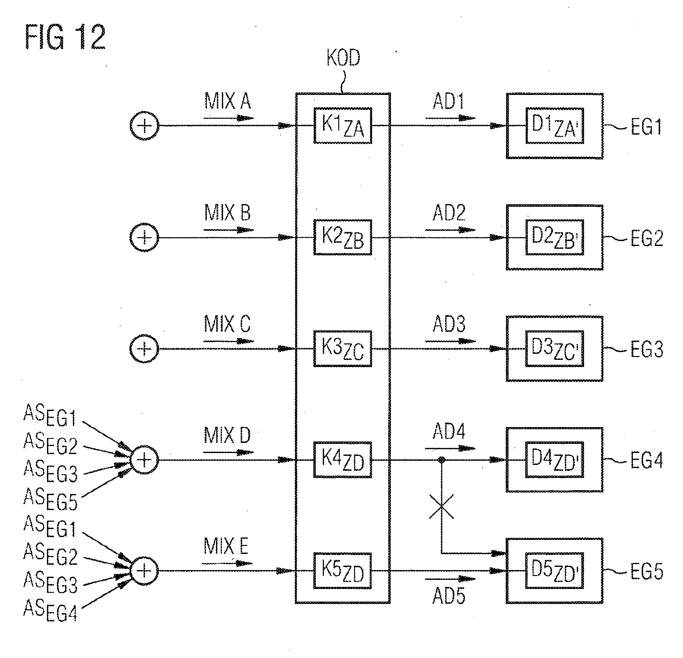

Erreicht wird dies, indem, nachdem das Mischsignal MIXE und der Kodierer K5 erzeugt wurde, die Kodier-Parameter und somit der Zustand ZD des Kodierer K4 erfasst werden und im selben Zeitabschnitt für den Kodierer K5 gesetzt werden. Dies erfolgt vorzugsweise mittels eines - in der Figur 11 durch einen Pfeil vom Kodierer K4 zum Kodierer K5 angedeuteten - Kopiervorgangs CP. Der Kodierer K5 nimmt somit ohne Verzug den Zustand ZD ein und kodiert basierend auf diesem Zustand das eingehende Mischsignal MIXE. Obwohl somit zwar der Kodiervorgang des Kodierers K5 plötzlich beginnt, wird dieses unstetige Verhalten an dem Dekodierer D5 der Kommunikationsendeinrichtung D5 nicht wahrgenommen, sofern ebenfalls im selben Zeitabschnitt ein Umschalten der Audioverbindung durchgeführt wird, so dass die vom Kodierer K5 generierten Audiodaten AD5 dem Dekodierer D5 zugeführt werden. Dies ist nun in Figur 12 dargestellt. Der Dekodierer D5 besitzt zum Umschaltezeitpunkt der Audioverbindung den Zustand ZD'. Da dieser dem Zustand ZD der Kodierer K4 und K5 entspricht, wird somit der Dekodiervorgang durch ein Umschalten vom Kodierer K4 zum Kodierer K5 nicht gestört, so dass keinerlei wahrnehmbare Fehler bei der Dekodierung durch den Dekodierer D5 auftreten. Aufgrund des endgültigen Umschaltens auf K5 und der Verbindung zum Dekodierer D5, wird in Figur 12 nun der Kodierer K5 nun als durchgezogenes Rechteck veranschaulicht.

Der in Figur 12 eingenommene Zustand ZD des Kodierers K5 und der Zustand ZD' des Dekodierers D5 gilt nur zum Umschaltezeitpunkt. In folgenden Zeitabschnitten, kann der Kodierer K5 dagegen spezifische Zustände einnehmen, abhängig vom Mischsignal MIXE. Und der Dekodierer D5 wird dem entsprechend ebenfalls vom Zustand des Dekodierers D4 verschiedene Zustände einnehmen.

In Kombination der anhand von Figur 8-12 erläuterten Vorgehensweise, lassen sich Kodierer einer Kodiereinrichtung dynamisch an- und abschalten, indem andere Kodierer die Kodieraufgaben übernehmen und Audioverbindungen zwischen den Kodierern und Dekodierern von Kommunikationsendeinrichtungen umgeschaltet werden.

Neben klassischen Audiokonferenzen ist ein Einsatz ebenfalls in weiteren Telefondiensten denkbar, in denen mehrere Teilnehmer zeitweise gleichzeitig gleiche und zeitweise verschiedene Audiosignale erhalten, und teilweise ein Wechsel der Audiosignale stattfindet. Beispielsweise sind dies Ansagedienste, bei denen einer Vielzahl von Teilnehmern eine Ansage - beispielsweise eine Werbenachricht - oder eine Wartemelodie vorgespielt wird. Hierbei kann temporär mehreren Teilnehmern über einen gemeinsamen Kodierer ein gemeinsames Signal übermittelt werden, wobei beispielsweise bei Durchschalten zu einem so genannten Call-Center-Agent ein teilnehmer-spezifischer Kodierer aktiviert und die Audioverbindung zu diesem Kodierer umgeschaltet wird. Somit können für die Wiedergabe von gleichförmigen Ansagen und Tonfolgen eine Verringerung von gleichzeitig aktiven Kodierern erreicht werden.

## Patentansprüche

1. Verfahren zum Durchführen einer Audiokonferenz, bei dem
- der Audiokonferenz von Kommunikationseinrichtungen Audiodatenströme (ADS1, ADS2, ADS3, ADS4) zugeführt werden,
- für die Audiodatenströme (ADS1, ADS2, ADS3, ADS4) jeweils zu einem Audiodatenstrom (ADS1, ADS2, ADS3, ADS4) zugeordnete Klassifizierungsinformationen (SIGE1, SIGE2, SIGE3) erfasst werden,
- die Audiodatenströme (ADS1, ADS2, ADS3, ADS4) entsprechend eines Ergebnisses einer Auswertung der Klassifizierungsinformationen (SIGE1, SIGE2, SIGE3) zu mindestens drei, bezüglich des Ergebnisses (GI) homogene Gruppen (ACT, HG, INACT, MUTE) zugeordnet werden,
- die individuelle Audiodatenströme (ADS1, ADS2, ADS3, ADS4) gruppeneinheitlich signalbearbeitet werden,
- zur Bildung von an den Kommunikationsendeinrichtungen auszugebenden Audiokonferenzdatenströmen (KADS1, KADS2, RADS3, KADS4) die signalbearbeiteten Audiodatenströme (ADS1, ADS2, ADS3, ADS4) überlagert werden,
**dadurch gekennzeichnet,**
**dass** die gruppeneinheitliche Signalbearbeitung eine gruppenspezifische Dämpfung (V1, V2, V3, V) der Audiodatenströme (ADS1, ADS2, ADS3, ADS4) umfasst.

2. Verfahren nach Anspruch. 1,
**dadurch gekennzeichnet,**
**dass** im Rahmen der Erfassung einer der Klassifizierungsinformationen (SIGE1, SIGE2, SIGE3) für einen der Audiodatenströme (ADS1., ADS2, ADS3, ADS4) mindestens eine eine Eigenschaft des Audiodatenstroms (ADS1, ADS2, ADS3, ADS4) wiedergebende Größe erfasst wird.

3. Verfahren nach einem der vorhergehenden Anspruch,
**dadurch gekennzeichnet,**
**dass** zum Zuordnen in homogene Gruppen (ACT, HG, INACT MUTE) die Klassifizierungsinformationen (SIGE1, SIG2, SIGE3) der Audiodatenströme (ADS1, ADS2, ADS3, ADS4) relativ zueinander ausgewertet werden.

4. Verfahren nach Anspruch 1,
**dadurch gekennzeichnet,**
**dass** die gruppenspezifische Dämpfung (V1, V2, V3, V) der Audiodatenströme (ADS1, ADS2, ADS3, ADS4) einer der Gruppen (ACT, HG, INACT, MUTE) abhängig von der Anzahl der teilnehmenden Kommunikationseinrichtungen an der Audiokonferenz durchgeführt wird.

5. Verfahren nach einem der vorhergehenden Ansprüche,
**dadurch gekennzeichnet,**
**dass** die Auswertung der Klassifizierungsinformationen (SIGE1, SIGE2, SIGE3) eine Bewertung einer einem der Audiodatenströme (ADS1, ADS2, ADS3, ADS4) individuell zugeordneten, vorgebbaren Gruppenvorauswahl umfasst, so dass je nach der Gruppenvorauswahl die Zuordnung zu einer vorausgewählten Gruppe (ACT, HG, INACT, MUTE) erzwungen wird.

6. Verfahren nach einem der vorhergehenden Ansprüche,
**dadurch gekennzeichnet,**
**dass** die Auswertung der Klassifizierungsinformationen (SIGE1, SIGE2, SIGE3) eine Bewertung der Anzahl zu einer Gruppe (ACT, HG, INACT, MUTE) zuzuordnenden Audiodatenströme (ADS1, ADS2, ADS3, ADS4) umfasst, und durch ein Überschreiten dieser Anzahl gegenüber einem Maximalschwellwert von zu einer Gruppe (ACT, HG, INACT, MUTE) zugeordneten Audiodatenströmen (ADS1, ADS2, ADS3, ADS4) eine Zuordnung in eine alternative Gruppe (ACT, HG, INACT, MUTE) erzwungen wird.

7. Verfahren nach einem der vorhergehenden Ansprüche,
**dadurch gekennzeichnet,**
**dass**
- eine erste (ACT) der mindestens drei Gruppen Audiodatenströme (ADS1, ADS2, ADS3, ADS4) von sprachaktiven Teilnehmern der Audiokonferenz repräsentiert,
- ein.e zweite (HG) der mindestens drei. Gruppen Audiodatenströme (ADS1, ADS2, ADS3, ADS4) von wenig sprachaktiven Teilnehmern der Audiokonferenz repräsentiert,
- eine dritte (INACT, MUTE) der mindestens drei Gruppen Audiodatenströme (ADS1, ADS2, ADS3, ADS4) von überwiegend zuhörenden Teilnehmern der Audiokonferenz repräsentiert.

8. Verfahren nach Anspruch 7,
**dadurch gekennzeichnet,**
**dass** im Rahmen der Auswertung der Klassifizierungsinformationen (SIGE1, SIGE2, SIGE3) die Audiodatenströme (ADS1, ADS2, ADS3, ADS4) der dritten Gruppe (INACT, MUTE) in eine vierte Gruppe (INACT) von inaktiven Teilnehmern und eine fünfte Gruppe (MUTE) von stummgeschalteten Zuhörern unterteilt werden.

9. Verfahren nach Anspruch 7 oder 8,
**dadurch gekennzeichnet,**
**dass** im Rahmen der Auswertung der Klassifizierungsinformationen (SIGE1, SIGE2, SIGE3) die Audiodatenströme (ADS1, ADS2, ADS3, ADS4) der ersten Gruppe (ACT) in eine sechste Gruppe von Sprechern mit besonders zu bevorzugenden Eigenschaften, eine siebte Gruppe von Sprechern mit gering zu bevorzugenden Eigenschaften und eine achte Gruppe von weiteren Sprechern ohne bevorzugende Eigenschaften unterteilt werden.

10. Verfahren nach Anspruch 2,
**dadurch gekennzeichnet,**
**dass** die Erfassung der mindestens einen eine Eigenschaft eines der Audiodatenströme (ADS1, ADS2, ADS3, ADS4) wiedergebenden Größe von einem Dekodierer (D1, D2, D3, D4) im Rahmen einer Dekodierung des jeweiligen Audiodatenstroms (ADS1, ADS2, ADS3, ADS4) durchgeführt wird.

11. Verfahren nach einem der vorhergehenden Ansprüche,
**dadurch gekennzeichnet,**
**dass** die Erfassung und die Auswertung der Klassifizierungsinformationen (SIGE1, SIGE2, SIGE3) jeweils während eines Zeitintervalls durchgeführt wird.

12. Verfahren nach einem der vorhergehenden Ansprüche,
**dadurch gekennzeichnet,**
**dass** die Erfassung und die Auswertung der Klassifizierungsinformationen (SIGE21, SIGE2, SIGE3) für ein Zeitintervall unter Einbeziehung der Auswertung der Klassifizierungsinformationen (SIGE1, SIGE2, SIGE3) eines vorhergehenden Zeitintervalls durchgeführt wird.

13. Verfahren nach einem der vorhergehenden Ansprüche,
**dadurch gekennzeichnet,**
**dass** eine wechselnde Zuordnung eines der Audiodatenströme (ADS1, ADS2, ADS3, ADS4) von einer ursprünglichen Gruppe (ACT, HG, INACT, MUTE) in einem ersten Zeitintervall zu einer weiteren Gruppe (ACT, HG, INACT, MUTE) in einem zweiten Zeitintervall erst vollzogen wird, wenn über mehrere Zeitintervalle im jeweilig untersuchten Zeitintervall eine Zuordnung zur weiteren Gruppe (ACT, HG, INACT, MUTE) erkannt wird.

14. Verfahren nach einem der vorhergehenden Ansprüche,
**dadurch gekennzeichnet,**
**dass** bei Erkennen einer wechselnden Zuordnung eines der Audiodatenströme (ADS1, ADS2, ADS3, ADS4) von einer ursprünglichen Gruppe (ACT, HG, INACT, MUTE) in einem ersten Zeitintervall zu einer weiteren Gruppe (ACT, HG, INACT, MUTE) in einem zweiten Zeitintervall der Audiodatenstrom (ADS1, ADS2, ADS3, ADS4) für einen vordefinierten Zeitabschnitt weder der ursprünglichen noch der weiteren Gruppe (ACT, HG, INACT, MUTE) zugeordnet wird, sondern eine Dämpfung audiodatenstromindividuell ausgehend von einer für die ursprüngliche Gruppe (ACT, HG, INACT, MUTE) vorgesehenen ersten Dämpfung zu einer für die weitere Gruppe (ACT, HG, INACT, MUTE) vorgesehenen zweiten Dämpfung gemäß einer monotonen Funktion stetig und/oder in diskreten Schritten über den Zeitabschnitt verändert wird.

15. Audiokonferenzeinrichtung für von Kommunikationseinrichtungen zugeführten Audiodatenströmen (ADS1, ADS2, ADS3, ADS4),
umfassend
- eine Klassifizierungsinformationserfassungseinheit (KLASS) zur Erfassung von jeweils zu einem Audiodatenstrom (ADS1, ADS2, ADS3, ADS4) zugeordneten Klassifizierungsinformationen (SIGE1, SIGE2, SIGE3),
- eine Auswertungseinheit (BWE) zur Auswertung der Klassifizierungsinformationen (SIGE1, SIGE2, SIGE3),
- eine Gruppierungseinheit (GE) zum Zuordnen der Audiodatenströme (ADS1, ADS2, ADS3, ADS4) zu mindestens drei, bezüglich eines Ergebnisses der Auswertung homogene Gruppen (ACT, HG, INACT, MUTE) entsprechend des Ergebnisses (GI) der Auswertung,
- eine Signalbearbeitungseinheit (VE) zur gruppeneinheitlichen Signalbearbeitung der individuellen Audiodatenströme (ADS1, ADS2, ADS3, ADS4), und
- eine Überlagerungseinheit (MIX) zur Bildung von an den Kommunikationsendeinrichtungen auszugebenden Audiokonferenzdatenströmen (KADS1, KADS2, KADS3, KADS4) durch Überlagerung der signalbearbeiteten Audiodatenströme (ADS1,
ADS2, ADS3, ADS4),
**dadurch gekennzeichnet,**
**dass** die Signalbearbeitungseinheit (VE) derart ausgestaltet ist, dass die gruppeneinheitliche Signalbearbeitung eine gruppenspezifische Dämpfung (V1, V2, V3, V) der Audiodatenströme (ADS1, ADS2, ADS3, ADS4) umfasst.

16. Verfahren nach einem der Ansprüche 1 bis 14, bei dem eine Umschaltung zwischen einem ersten Kodieren (K2, K4) und einem zweiten Kodierer (K4, K5) bei einer zwischen dem ersten Kodierer (K2, K4) und einem Dekodierer (D2, D5) bestehenden Audiodatenverbindung, erfolgt bei der
- dem Dekodierer (D2, D5) durch den ersten Kodierer (K2, K4) kodierte Audiodaten (AD2, AD4) zugeführt werden,
- durch den ersten Kodierer (K2, K4) unter Verwendung von durch eine Audiodatenhistorie beeinflussten Kodier-Parametern mittels Kodieren eines, dem ersten Kodierer (K2, K4) zugeführten ersten Audioeingangssi.gnals (MIXB, MIXD) die kodierten Audiodaten (AD2, AD4) erzeugt werden, und
- die Kodier-Parameter eines der Kodierer (K2, K4, K5) zu einem aktuellen Zeitabschnitt jeweils abhängig durch ein zugeführtes Audioeingangssignal (MIXB, MILD) des aktuellen Zeitabschnitts sowie durch das Audioeingangssignal (MIXB, MIXD) mindestens eines vorhergehenden Zeitabschnitts gebildet werden,
**dadurch gekennzeichnet,**
**dass** die Audiodatenverbindung vom ersten Kodierer (K2, K4) zum zweiten Kodierer (K4, K5) derart umgeschaltet wird, dass im Rahmen des Umschaltens die Kodier-Parameter des zweite Kodierer (K4, K5) in Übereinstimmung mit den Kodier-Parametern des ersten Kodierers (K2, K4) gebracht werden und mit Eintritt der Übereinstimmung der Kodier-Parameter die Audioverbindung zum zweiten Kodierer (K4, K5) umgeschaltet wird.

17. Verfahren nach Anspruch 16,
**dadurch gekennzeichnet,**
**dass** im Rahmen des Umschaltens der Audiodatenverbindung vom ersten Kodierer (K2, K4) zum zweiten Kodierer (K4, K5) das erste Audioeingangssignal (MIXB, MIXD) derart modifiziert wird, dass der zweite Kodierer (K4, K5) in denselben Zustand des ersten Kodierers (K2, K4) gebracht wird.

18. Verfahren nach Anspruch 16 oder 17,
**dadurch gekennzeichnet,**
**dass** im Rahmen des Umschaltens der Audiodatenverbindung vom ersten Kodierer (K2, K4) zum zweiten Kodierer (K4, K5) das erste Audioeingangssignal (MIXB, MIXD) derart modifiziert wird, dass ein am zweiten Kodierer (K4, K5) anliegendes zweites Audioeingangssignal als erstes Audioeingangssignal (MIXB, MIXD) dem ersten Kodierer (K2, K4) zugeführt wird.

19. Verfahren nach einem der Ansprüche 16 bis 18,
**dadurch gekennzeichnet,**
**dass** im Rahmen des Umschaltens der Audiodatenverbindung vom ersten Kodierer (K2, K4) zum zweiten Kodierer (K4, K5) ein Zustand des zweiten Kodierer (K4, K5) derart modifiziert wird, dass die Kodier-Parameter des ersten Kodierers (K2, K4) erfasst werden und als Kodier-Parameter für den zweiten Kodierer (K4, K5) gesetzt werden.

20. Audiokonferenzeinrichtung,
**gekennzeichnet durch**
Mittel zur Durchführung des Umschalteverfahrens gemäß einem der Verfahrensansprüche 16 bis 19.

## Claims

1. A method for carrying out an audio conference, whereby
- audio data flows (ADS1, ADS2, ADS3, ADS4) are fed to the audio conference from communication devices,
- classification information (SIGE1, SIGE2, SIGE3) associated with a respective audio data flow (ADS1, ADS2, ADS3, ADS4) is recorded for the audio data flows (ADS1, ADS2, ADS3, ADS4),
- according to the result of an evaluation of the classification information (SIGE1, SIGE2, SIGE3) the audio data flows (ADS1, ADS2, ADS3, ADS4) are assigned to at least three groups (ACT, HG, INACT, MUTE) which are homogeneous with regard to the result (GI),
- the signals of the individual audio data flows (ADS1, ADS2, ADS3, ADS4) are processed uniformly in their groups,
- the signal-processed audio data flows (ADS1, ADS2, ADS3, ADS4) are overlaid so as to form audio conference data flows (KADS1, KADS2, KADS3, KADS4) that are to be output at the communication terminals,
wherein the signal processing that is uniform in each group comprises a group-specific attenuation (V1, V2, V3, V) of the audio data flows (ADS1, ADS2, ADS3, ADS4).

2. The method of caim 1 wherein at least one variable representing a property of the audio data flows (ADS1, ADS2, ADS3, ADS4) is recorded during the recording of one of the items of classification information (SIGE1, SIGE2, SIGE3) for one of the audio data flows (ADS1, ADS2, ADS3, ADS4).

3. The method of either of the preceding claims wherein the items of classification information (SIGE1, SIG2, SIGE3) of the audio data flows (ADS1, ADS2, ADS3, ADS4) are evaluated relative to one another for the purpose of assignment to homogeneous groups (ACT, HG, INACT, MUTE).

4. The method of claim 1 wherein the group-specific attenuation (V1, V2, V3, V) of the audio data flows (ADS1, ADS2, ADS3, ADS4) of one of the groups (ACT, HG, INACT, MUTE) is carried out depending on the number of communication devices participating in the audio conference.

5. The method of any one of the preceding claims wherein the evaluation of the classification information (SIGE1, SIGE2, SIGE3) comprises a weighting of a predefinable group preselection that is individually assigned to one of the audio data flows (ADS1, ADS2, ADS3, ADS4) such that the assignment to a preselected group (ACT, HG, INACT, MUTE) is forced depending on the group preselection.

6. The method of any one of the preceding claims wherein the evaluation of the classification information (SIGE1, SIGE2, SIGE3) comprises a weighting of the number of audio data flows (ADS1, ADS2, ADS3, ADS4) that are to be assigned to a group (ACT, HG, INACT, MUTE) and wherein an assignment to an alternative group (ACT, HG, INACT, MUTE) is forced by the fact of this number exceeding a maximum threshold value of audio data flows (ADS1, ADS2, ADS3, ADS4) assigned to a group (ACT, HG, INACT, MUTE).

7. The method of any one of the preceding claims wherein
- a first (ACT) of the at least three groups represents audio data flows (ADS1, ADS2, ADS3, ADS4) of speech-active participants in the audio conference,
- a second (HG) of the at least three groups represents audio data flows (ADS1, ADS2, ADS3, ADS4) of rarely speech-active participants in the audio conference,
- a third (INACT, MUTE) of the at least three groups represents audio data flows (ADS1, ADS2, ADS3, ADS4) of mainly listening participants in the audio conference.

8. The method of claim 7 wherein, during the evaluation of the classification information (SIGE1, SIGE2, SIGE3), the audio data flows (ADS1, ADS2, ADS3, ADS4) of the third group (INACT, MUTE) are subdivided into a fourth group (INACT) of inactive participants and a fifth group (MUTE) of muted listeners.

9. The method of claim 7 or 8 wherein, during the evaluation of the classification information (SIGE1, SIGE2, SIGE3), the audio data flows (ADS1, ADS2, ADS3, ADS4) of the first group (ACT) are subdivided into a sixth group of speakers having properties to be given special preference, a seventh group of speakers having properties to be given low preference and an eighth group of other speakers having no properties to be given preference.

10. The method of claim 2 wherein the recording of the at least one variable that reproduces a property of one of the audio data flows (ADS1, ADS2, ADS3, ADS4) is carried out by a decoder (D1, D2, D3, D4) during a decoding of the respective audio data flow (ADS1, ADS2, ADS3, ADS4).

11. The method of any one of the preceding claims wherein the recording and the evaluation of the classification information (SIGE1, SIGE2, SIGE3) is carried out during a time interval.

12. The method of any one of the preceding claims wherein the recording and the evaluation of the classification information (SIGE1, SIGE2, SIGE3) for one time interval is carried out with the inclusion of the evaluation of the classification information (SIGE1, SIGB2, SIGE3) of a preceding time interval.

13. The method of any one of the preceding claims wherein an alternating assignment of one of the audio data flows (ADS1, ADS2, ADS3, ADS4) from an original group (ACT, HG, INACT, MUTE) in a first time interval to another group (ACT, HG, INACT, MUTE) in a second time interval is only effected when over a plurality of time intervals an assignment to that other group (ACT, HG, INACT, MUTE) is detected in the respectively examined time interval.

14. The method of any one of the preceding claims wherein, upon the detection of an alternating assignment of one of the audio data flows (ADS1, ADS2, ADS3, AOS4) from an original group (ACT, HG, INACT, MUTE) in a first time interval to another group (ACT, HG, INACT, MUTE) in a second time interval, the audio data flow (ADS1, ADS2, ADS3, ADS4) is assigned -for a predefined time segment - neither to the original nor to the other group (ACT, HG, INACT, MUTE) but an attenuation is varied according to a monotone function steplessly and/or in discrete increments over the time segment for individual audio data flows, starting from a first attenuation provided for the original group (ACT, HG, INACT, MUTE) to a second attenuation provided for the other group (ACT, HG, INACT, MUTE).

15. An audio conference device for audio data flows (ADS1, ADS2, ADS3, ADS4) fed by communication devices, comprising
- a classification information recording unit (KLASS) for recording classification information (SIGE1, SIGE2, SIGE3) respectively assigned to an audio data flow (ADS1, ADS2, ADS3, ADS4),
- an evaluation unit (BWE) for the evaluation of the classification information (SIGE1, SIGE2, SIGE3),
- a grouping unit (GE) for the assignment, according to the result (GI) of the evaluation, of the audio data flows (ADS1, ADS2, ADS3, ADS4) to at least three groups (ACT, HG, INACT, MUTE) that are homogeneous with regard to a result of the evaluation,
- a signal processing unit (VE) for the signal processing uniformly in their groups of the individual audio data flows (ADS1, ADS2, ADS3, ADS4), and
- an overlay unit (MIX) for the forming of audio conference data flows (KADS1, KADS2, KADS3, KADS4) to be output at the communication terminals by overlaying the signal-processed audio data flows (ADS1, ADS2, ADS3, ADS4), wherein the signal processing unit (VE) is configured in such a way that the signal processing uniformly in each group comprises a group-specific attenuation (V1, V2, V3, V) of the audio data flows (ADS1, ADS2, AD53, ADS4).

16. The method of any one of claims 1 to 14 in which a switching between a first encoder (K2, K4) and a second encoder (K4, K5) is effected while an audio data connection exists between the first encoder (K2, K4) and a decoder (02, 05), during which
- audio data (AD2, AD4) encoded by the first encoder (K2, K4) are fed to the decoder (D2, D5),
- using encoding parameters influenced by an audio data history, the first encoder (K2, K4) generates the encoded audio data (AD2, AD4) by means of encoding a first audio input signal (MIXB, MIXD) that is fed to the first encoder (K2, K4), and
- the encoding parameters of one of the encoders (K2, K4, K5) at a current time segment are each dependently formed by a fed audio input signal (MIXB, MIXD) of the current time segments and by the audio input signal (MIXB, MIXD) of at least one previous time segment,
wherein the audio data connection from the first encoder (K2, K4) to the second encoder (K4, KS) is switched in such a way that, during the switching process, the encoding parameters of the second encoder (K4, K5) are matched with the encoding parameters of the first encoder (K2, K4) and when the encoding parameters are matched the audio connection is switched to the second encoder (K4, K5).

17. The method of claim 16 wherein, during the switching of the audio data connection from the first encoder (K2, K4) to the second encoder, (K4, K5) the first audio input signal (MIXB, MIXD) is modified in such a way that the second encoder (K4, K5) is placed in the same condition as the first encoder (K2, K4).

18. The method of claim 16 or 17 wherein, during the switching of the audio data connection from the first encoder (K2, K4) to the second encoder (K4, K5), the first audio input signal (MIXB, MIXD) is modified in such a way that a second audio input signal present at the second encoder (K4, K5) is fed to the first encoder (K2, K4) as a first audio input signal (MIXB, MIXD).

19. The method of any one of claims 16 to 18 wherein, during the switching of the audio data connection from the first encoder (K2, K4) to the second encoder (K4, K5), a state of the second encoder (K4, K5) is modified in such a way that the encoding parameters of the first encoder (K2, K4) are recorded and set as encoding parameters for the second encoder (K4, K5).

20. An audio conference device **characterised by** means for carrying out the switching process according to one of the method claims 16 to 19.

## Revendications

1. Procédé servant à réaliser une conférence audio, dans le cadre duquel
- des flux de données audio (ADS1, ADS2, ADS3, ADS4) sont amenés à la conférence audio par des dispositifs de communication,
- des informations relatives à la classification (SIGE1, SIGE2, SIGE3) attribuées respectivement à un flux de données audio (ADS1, ADS2, ADS3, ADS4) sont détectées pour les flux de données audio (ADS1, ADS2, ADS3, ADS4),
- les flux de données audio (ADS1, ADS2, ADS3, ADS4) sont attribués conformément à un résultat d'une analyse des informations relatives à la classification (SIGE1, SIGE2, SIGE3) à au moins trois groupes (ACT, HG, INACT, MUTE) homogènes par rapport au résultat (GI),
- les flux de données audio (ADS1, ADS2, ADS3, ADS4) individuels sont traités selon le signal de manière uniforme dans chaque groupe,
- les flux de donnée audio (ADS1, ADS2, ADS3, ADS4) sont traités selon le signal sont superposés pour former des flux de données de conférence audio (KADS1, KADS2, KADS3, KADS4) à fournir aux terminaux de communication, **caractérisé en ce**
**que** le traitement selon le signal effectué de manière uniforme dans chaque groupe comprend un affaiblissement (V1, V2, V3, V) spécifique à chaque groupe des flux de données audio (ADS1, ADS2, ADS3, ADS4).

2. Procédé selon la revendication 1,
**caractérisé en ce**
**qu'**est détectée au moins une dimension reproduisant une caractéristique du flux de données audio (ADS1, ADS2, ADS3, ADS4) dans le cadre de la détection d'une des informations relatives à la classification (SIGE1, SIGE2, SIGE3) pour un des flux de données audio (ADS1, ADS2, ADS3, ADS4).

3. Procédé selon l'une quelconque des revendications précédentes,
**caractérisé en ce**
**que** les informations relatives à la classification (SIGE1, SIGE2, SIGE3) des flux de données audio (ADS1, ADS2, ADS3, ADS4) sont analysées les unes par rapport aux autres aux fins de l'attribution dans des groupes (ACT, HG, INACT, MUTE) homogènes.

4. Procédé selon la revendication 1,
**caractérisé en ce**
**que** l'affaiblissement (V1, V2, V3, V) spécifique à chaque groupe des flux de données audio (ADS1, ADS2, ADS3, ADS4) d'un des groupes (ACT, HG, INACT, MUE) est effectué en fonction du nombre de dispositifs de communication participant à la conférence audio.

5. Procédé selon l'une quelconque des revendications précédentes,
**caractérisé en ce**
**que** l'analyse des informations relatives à la classification (SIGE1, SIGE2, SIGE3) comporte une évaluation d'une présélection de groupes pouvant être définie au préalable, attribuée individuellement à l'un des flux de données audio (ADS1, ADS2, ADS3, ADS4) de sorte que l'attribution à un groupe (ACT, HG, INACT, MUTE) présélectionné est imposée selon la présélection du groupe.

6. Procédé selon l'une quelconque des revendications précédentes,
**caractérisé en ce**
**que** l'analyse des informations relatives à la classification (SIGE1, SIGE2, SIGE3) comporte une évaluation du nombre de flux de données audio (ADS1, ADS2, ADS3, ADS4) devant être attribués à un groupe (ACT, HG, INACT, MUTE), et en ce que du fait d'un dépassement dudit nombre par rapport à une valeur seuil maximale de flux de données audio (ADS1, ADS2, ADS3, ADS4) devant être attribués à un groupe (ACT, HG, INACT, MUTE), une attribution est imposée dans un groupe (ACT, HG, INACT, MUTE) alternatif.

7. Procédé selon l'une quelconque des revendications précédentes,
**caractérisé en ce**
**que**
- un (ACT) des trois groupes ou plus représente des flux de données audio (ADS1, ADS2, ADS3, ADS4) de participants prenant activement la parole lors de la conférence audio,
- un deuxième (HG) des trois groupes ou plus représente des flux de données audio (ADS1, ADS2, ADS3, ADS4) de participants prenant moins activement la parole lors de la conférence audio,
- un troisième (INACT, MUTE) des trois groupes ou plus représente des flux de données audio (ADS1, ADS2, ADS3, ADS4) de participants majoritairement auditeurs lors de la conférence audio.

8. Procédé selon la revendication 7,
**caractérisé en ce**
**que**, dans le cadre de l'analyse des informations relatives à la classification (SIGE1, SIGE2, SIGE3), les flux de données audio (ADS1, ADS2, ADS3, ADS4) du troisième groupe (INACT, MUTE) sont divisés en un quatrième groupe (INACT) regroupant des participants inactifs et en un cinquième groupe (MUTE) regroupant des auditeurs rendus silencieux.

9. Procédé selon la revendication 7 ou 8,
**caractérisé en ce**
**que** dans le cadre de l'analyse des informations relatives à la classification (SIGE1, SIGE2, SIGE3), les flux de données audio (ADS1, ADS2, ADS3, ADS4) du premier groupe (ACT) sont divisés en un sixième groupe de locuteurs présentant notamment des caractéristiques à privilégier, en un septième groupe de locuteurs présentant des caractéristiques à privilégier dans une moindre mesure, et en un huitième groupe regroupant d'autres locuteurs sans caractéristiques à privilégier.

10. Procédé selon la revendication 2,
**caractérisé en ce**
**que** la détection de la au moins une dimension reproduisant une caractéristique d'un des flux de données audio (ADS1, ADS2, ADS3, ADS4) est effectuée par un décodeur (D1, D2, D3, D4) dans le cadre d'un décodage du flux de données audio respectif (ADS1, ADS2, ADS3, ADS4).

11. Procédé selon l'une quelconque des revendications précédentes,
**caractérisé en ce**
**que** la détection et l'analyse des informations relatives à la classification (SIGE1, SIGE2, SIGE3) sont effectuées respectivement lors d'un certain laps de temps.

12. Procédé selon l'une quelconque des revendications précédentes,
**caractérisé en ce**
**que** la détection et l'analyse des informations relatives à la classification (SIGE1, SIGE2, SIGE3) sont effectuées pour un certain laps de temps en intégrant l'analyse des informations relatives à la classification (SIGE1, SIGE2, SIGE3) d'un laps de temps précédent.

13. Procédé selon l'une quelconque des revendications précédentes,
**caractérisé en ce**
**qu'**une attribution en alternance d'un des flux de données audio (ADS1, ADS2, ADS3, ADS4) par un groupe initial (ACT, HG, INACT, MUTE) lors d'un premier laps de temps, à un autre groupe (ACT, HG, INACT, MUTE) est exécutée lors d'un deuxième laps de temps seulement quand une attribution à un autre groupe (ACT, HG, INACT, MUTE) est identifiée dans le laps de temps respectivement examiné sur plusieurs laps de temps.

14. Procédé selon l'une quelconque des revendications précédentes,
**caractérisé en ce**
**que** lors de l'identification d'une attribution en alternance d'un des flux de données audio (ADS1, ADS2, ADS3, ADS4) à un autre groupe (ACT, HG, INACT, MUTE) lors d'un premier laps de temps par un groupe initial (ACT, HG, INACT, MUTE), le flux de données audio (ADS1, ADS2, ADS3, ADS4) n'est attribué lors d'un deuxième laps de temps, pour une période de temps prédéfinie, ni au groupe initial ni à l'autre groupe (ACT, HG, INACT, MUTE), en ce qu'en revanche un affaiblissement est modifié, selon une fonction monotone, en continu et/ou par phases discrètes sur la période de temps, de manière spécifique à chaque flux de données audio, en partant d'un premier affaiblissement prévu pour le groupe initial (ACT, HG, INACT, MUTE) vers un deuxième affaiblissement prévu pour l'autre groupe (ACT, HG, INACT, MUTE).

15. Dispositif de conférence audio pour des flux de données audio (ADS1, ADS2, ADS3, ADS4) amenés par des dispositifs de communication,
comprenant
- une unité de détection d'information relative à la classification (KLASS) servant à détecter des informations relatives à la classification (SIGE1, SIGE2, SIGE3) attribuées à respectivement un flux de données audio (ADS1, ADS2, ADS3, ADS4),
- une unité d'analyse (BWE) servant à analyser les informations relatives à la classification (SIGE1, SIGE2, SIGE3),
- une unité de groupement (GE) servant à attribuer les flux de données audio (ADS1, ADS2, ADS3, ADS4) à au moins trois groupes (ACT, HG, INACT, MUTE) homogènes par rapport à un résultat de l'analyse conformément au résultat (GI) de l'analyse,
- une unité de traitement de signal (VE) servant à traiter selon le signal de manière uniforme dans chaque groupe les flux de données audio (ADS1, ADS2, ADS3, ADS4) individuels, et
- une unité de superposition (MIX) servant à former des flux de données de conférence audio (KADS1, KADS2, KADS3, KADS4) à fournir aux terminaux de communication par superposition des flux de données audio (ADS1, ADS2, ADS3, ADS4) traités selon le signal,
**caractérisé en ce**
**que** l'unité de traitement de signal (VE) est configurée de telle manière que le traitement de signal de manière uniforme dans chaque groupe comporte un affaiblissement (V1, V2, V3, V) spécifique à chaque groupe des flux de données audio (ADS1, ADS2, ADS3, ADS4).

16. Procédé selon l'une quelconque des revendications 1 à 14, dans le cadre duquel une commutation entre un premier encodeur (K2, K4) et un deuxième encodeur (K4, K5) a lieu lors d'une liaison de données audio entre le premier encodeur (K2, K4) et un décodeur (D2, D5), dans le cadre de laquelle liaison,
- des données audio (AD2, AD4) codées sont amenées au décodeur (D2, D5) par le premier encodeur (K2, K4),
- les données audio (ADS2, ADS4) codées sont générées par le premier encodeur (K2, K4) en utilisant des paramètres de codage influencés par un historique des données audio, au moyen du codage d'un premier signal d'entrée audio (MIXB, MIXD) amené au premier encodeur (K2, K4), et
- les paramètres de codage d'un des encodeurs (K2, K4, K5) sont formés respectivement selon une période de temps instantanée par un signal d'entrée audio (MIXB, MIXD) amené de la période de temps instantanée ainsi que par le signal d'entrée audio (MIXB, MIXD) d'au moins une période de temps précédente,
**caractérisé en ce**
**que** la liaison de données audio du premier encodeur (K2, K4) au deuxième encodeur (K4, K5) est commutée de telle manière que dans le cadre de la commutation, les paramètres de codage du deuxième encodeur (K4, K5) sont amenés à coïncider avec les paramètres de codage du premier encodeur (K2, K4) et que la mise en correspondance des paramètres de codage entraîne la commutation de la liaison audio vers le deuxième encodeur (K4, K5).

17. Procédé selon la revendication 16,
**caractérisé en ce**
**que** dans le cadre de la commutation de la liaison de données audio depuis le premier encodeur (K2, K4) vers le deuxième encodeur (K4, K5), le premier signal d'entrée audio (MIXB, MIXD) est modifié de telle manière que le deuxième encodeur (K4, K5) est amené dans le même état que le premier encodeur (K2, K4).

18. Procédé selon la revendication 16 ou 17,
**caractérisé en ce**
**que** dans le cadre de la commutation de la liaison de données audio du premier encodeur (K2, K4) vers le deuxième encodeur (K4, K5), le premier signal d'entrée audio (MIXB, MIXD) est modifié de telle manière qu'un deuxième signal d'entrée audio appliqué au niveau du deuxième encodeur (K4, K5) est amené en tant que premier signal d'entrée audio (MIXB, MIXD) au premier encodeur (K2, K4).

19. Procédé selon l'une quelconque des revendications 16 à 18,
**caractérisé en ce**
**que** dans le cadre de la commutation de la liaison de données audio du premier encodeur (K2, K4) vers le deuxième encodeur (K4, K5), un état du deuxième encodeur (K4, K5) est modifié de telle manière que les paramètres de codage du premier encodeur (K2, K4) sont détectés et sont utilisés en tant que paramètres de codage pour le deuxième encodeur (K4, K5).

20. Dispositif de conférence audio,
**caractérisé par**
des moyens servant à la mise en oeuvre du procédé de commutation selon l'une quelconque des revendications 16 à 19.
